(19)

Europäisches
Patentamt
European
Patent Office
Office européen
des brevets

(11) **EP 4 647 625 A1**

(12) **EUROPEAN PATENT APPLICATION**
published in accordance with Art. 153(4) EPC

(43) Date of publication:
**12.11.2025 Bulletin 2025/46**

(21) Application number: **24763962.8**

(22) Date of filing: **28.02.2024**

(51) International Patent Classification (IPC):
**F16C 32/04** *(2006.01)*  **H02K 7/09** *(2006.01)*

(52) Cooperative Patent Classification (CPC):
**F16C 32/04; H02K 7/09**

(86) International application number:
**PCT/JP2024/007233**

(87) International publication number:
**WO 2024/181483 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.02.2023 JP 2023029362
26.10.2023 JP 2023183995**

(71) Applicants:
• **Daikin Industries, Ltd.
Osaka-shi, Osaka 530-0001 (JP)**
• **INSTITUTE OF SCIENCE TOKYO
Tokyo 152-8550 (JP)**

(72) Inventors:
• **SAKURAGI, Takuya
Osaka-shi, Osaka 530-0001 (JP)**

• **IRINO, Yusuke
Osaka-shi, Osaka 530-0001 (JP)**
• **TONARI, Tatsuya
Osaka-shi, Osaka 530-0001 (JP)**
• **TAGAMI, Kenta
Osaka-shi, Osaka 530-0001 (JP)**
• **FU, Yuu
Osaka-shi, Osaka 530-0001 (JP)**
• **CHIBA, Akira
Tokyo 152-8550 (JP)**
• **FUJII, Yusuke
Tokyo 152-8550 (JP)**
• **KIYOTA, Kyohei
Tokyo 152-8550 (JP)**
• **NOGUCHI, Takahiro
Tokyo 152-8550 (JP)**

(74) Representative: **Hoffmann Eitle
Patent- und Rechtsanwälte PartmbB
Arabellastraße 30
81925 München (DE)**

(54) **MAGNETIC BEARING SYSTEM, COMPRESSOR, AND REFRIGERATION DEVICE**

(57)     A magnetic bearing system (100) includes a rotary shaft (101) and a magnetic bearing (105, 107, 130) having an electromagnet coil (106, 108, 108B, 135, 136). One end of the electromagnet coil (106, 108, 108B, 135, 136) is connected to the neutral point of a first multi-phase winding (113, 115, 123, 125, 173, 181) having at least three or more phases.

FIG.2

**EP 4 647 625 A1**

**Description**

TECHNICAL FIELD

The present disclosure relates to a magnetic bearing system, a compressor, and a refrigeration apparatus.

BACKGROUND ART

A five-axis control magnetic bearing system has been known, in which all motions of a rotary shaft are actively controlled for positioning (Patent Document 1). The five-axis control magnetic bearing system includes a motor that rotates the rotary shaft in a circumferential direction, a thrust magnetic bearing that controls the position of the rotary shaft in the axial direction, and a radial magnetic bearing that controls the position of the rotary shaft in a radial direction.

In the conventional five-axis control magnetic bearing system, the thrust magnetic bearing can generate electromagnetic force in the axial direction, and includes two units, that is, a front-side thrust magnetic bearing that generates electromagnetic force in one axial direction and a rear-side thrust magnetic bearing that generates electromagnetic force in the other axial direction, and one inverter including a plurality of switching elements is used for front-side and rear-side thrust support coils. One radial magnetic bearing is disposed on each of the front side and the rear side. An inverter is individually disposed for each radial magnetic bearing and a coil of the motor.

CITATION LIST

PATENT DOCUMENT

Patent Document 1: Japanese Unexamined Patent Publication No. 2001-041236

SUMMARY OF THE INVENTION

TECHNICAL PROBLEM

In a back-to-back magnetic bearing system, a bearingless motor may be disposed on each of the front side and the rear side, instead of a motor and two radial magnetic bearings. In this case, one inverter is required for a motor drive coil of one bearingless motor, and one PWM inverter is required for a radial support coil of one bearingless motor.

As described above, in the conventional magnetic bearing system, it is necessary to provide a large number of inverters, and for this reason, it is difficult to avoid an increase in a product cost.

An object of the present disclosure is to reduce the cost of an inverter in a magnetic bearing system.

SOLUTION TO THE PROBLEM

A first aspect of the present disclosure is directed to a magnetic bearing system (100) including a rotary shaft (101) and a magnetic bearing (105, 107, 130) having an electromagnet coil (106, 108, 108B, 135, 136), and one end of the electromagnet coil (106, 108, 108B, 135, 136) is connected to the neutral point of a first multi-phase winding (113, 115, 123, 125, 173, 181) having at least three or more phases.

In the first aspect, by adjusting the current of the first multi-phase winding (113, 115, 123, 125, 173, 181), the voltage applied to one end of the electromagnet coil (106, 108, 108B, 135, 136) of the magnetic bearing (105, 107, 130) can be adjusted. Consequently, it is not necessary to provide dedicated switching elements for voltage adjustment at one end of the electromagnet coil (106, 108, 108B, 135, 136) of the magnetic bearing (105, 107, 130), and therefore, the cost of the inverter can be reduced.

A second aspect of the present disclosure is an embodiment of the first aspect. In the second aspect, the other end of the electromagnet coil (106, 108, 108B, 135, 136) is connected to the neutral point or an end portion of a second multi-phase winding (113, 115, 123, 125, 173, 181) having at least three or more phases, which is different from the first multi-phase winding (113, 115, 123, 125, 173, 181).

In the second aspect, by adjusting the current of the second multi-phase winding (113, 115, 123, 125, 173, 181), the voltage applied to the other end of the electromagnet coil (106, 108, 108B, 135, 136) of the magnetic bearing (105, 107, 130) can be adjusted. Consequently, it is not necessary to provide dedicated switching elements for voltage adjustment at both ends of the electromagnet coil (106, 108, 108B, 135, 136) of the magnetic bearing (105, 107, 130). This further reduces the cost of the inverter.

A third aspect of the present disclosure is an embodiment of the second aspect. In the third aspect, the magnetic bearing system further includes a bearingless motor (110, 120) including a motor winding (115, 125) that generates rotation torque on the rotary shaft (101) by power supply and a radial support winding (113, 123) that generates shaft support force for supporting the rotary shaft (101) in a non-contact manner by power supply, the first multi-phase winding (113, 115, 123, 125, 173, 181) is one of the motor winding (115, 125) or the radial support winding (113, 123), and the second multi-phase winding (113, 115, 123, 125, 173, 181) is the other one of the motor winding (115, 125) or the radial support winding (113, 123).

In the third aspect, using the single bearingless motor (110, 120), the electromagnet coil (106, 108, 108B, 135, 136) of the magnetic bearing (105, 107, 130) can be operated without adding a switching element.

A fourth aspect of the present disclosure is an embodiment of the third aspect. In the fourth aspect, the radial support winding (113, 123) is wound with a fractional pitch, and the winding pitch of the radial support winding (113, 123) is equal to or greater than 1/2 of the number of slots of each pole of the radial support winding (113, 123).

In the fourth aspect, when zero phase current is applied to the radial support winding (113, 123), the influence of the zero phase current on the shaft support force of the radial support winding (113, 123) can be reduced, and therefore, the bearingless motor (110, 120) can be easily controlled.

A fifth aspect of the present disclosure is an embodiment of the second aspect. In the fifth aspect, the magnetic bearing system further includes a first bearingless motor (110) including a first motor winding (115) that generates rotation torque on the rotary shaft (101) by power supply and a first radial support winding (113) that generates shaft support force for supporting the rotary shaft (101) in a non-contact manner by power supply, and a second bearingless motor (120) including a second motor winding (125) that generates rotation torque on the rotary shaft (101) by power supply and a second radial support winding (123) that generates shaft support force for supporting the rotary shaft (101) in a non-contact manner by power supply, the first multi-phase winding (113, 115, 123, 125, 173, 181) is one of the first motor winding (115) or the first radial support winding (113), and the second multi-phase winding (113, 115, 123, 125, 173, 181) is one of the second motor winding (125) or the second radial support winding (123).

In the fifth aspect, using the two bearingless motors (110, 120), the electromagnet coil (106, 108, 108B) of the magnetic bearing (105, 107) can be operated without adding a switching element.

A sixth aspect of the present disclosure is an embodiment of the fifth aspect. In the sixth aspect, at least one radial support winding (113, 123) of the first radial support winding (113) or the second radial support winding (123) is wound with a fractional pitch, and the winding pitch of the radial support winding (113, 123) is equal to or greater than 1/2 of the number of slots of each pole of the radial support winding (113, 123).

In the sixth aspect, when the zero phase current is applied to the radial support winding (113, 123), the influence of the zero phase current on the shaft support force of the radial support winding (113, 123) can be reduced, and therefore, the bearingless motor (110, 120) can be easily controlled.

A seventh aspect of the present disclosure is an embodiment of any one of the first to sixth aspects. In the seventh aspect, the electromagnet coil (106, 108, 108B, 135, 136) and the first multi-phase winding (113, 115, 123, 125, 173) are disposed in an identical pressure vessel (150), and the one end of the electromagnet coil (106, 108, 108B, 135, 136) is connected to the neutral point of the first multi-phase winding (113, 115, 123, 125, 173) in the pressure vessel (150).

In the seventh aspect, it is not necessary to provide a dedicated airtight terminal that electrically connects the inside and outside of the pressure vessel (150) in order to apply voltage to one end of the electromagnet coil (106, 108, 108B, 135, 136) of the magnetic bearing (105, 107, 130), and therefore, not only the cost of the inverter but also the cost of the airtight terminal can be reduced.

An eighth aspect of the present disclosure is an embodiment of any one of the first to seventh aspects. In the eighth aspect, the magnetic bearing system further includes another electromagnet coil (106, 108, 108A, 135, 137) that generates, on the rotary shaft (101), electromagnetic force in a direction identical to or opposite to electromagnetic force generated on the rotary shaft (101) by energizing the electromagnet coil (106, 108, 108B, 136), and the control band of the electromagnet coil (106, 108, 108B, 136) is lower than the control band of the another electromagnet coil (106, 108, 108A, 135, 137).

In the eighth aspect, since the control band of the electromagnet coil (106, 108, 108B, 136) of the magnetic bearing (105, 107, 130) is set to be low, the switching frequency of the electromagnet coil (106, 108, 108B, 136) can be lowered, and a loss due to switching can be reduced.

A ninth aspect of the present disclosure is an embodiment of the eighth aspect. In the ninth aspect, the magnetic bearing system further includes another magnetic bearing (105, 107) having the another magnetic bearing (106, 108), bias current is supplied to the electromagnet coil (106, 108), and a direction of electromagnetic force generated in the axial direction on the rotary shaft (101) by energizing the electromagnet coil (106, 108) and a direction of electromagnetic force generated in the axial direction on the rotary shaft (101) by energizing the another magnetic bearing (106, 108) are opposite to each other.

In the ninth aspect, the switching frequency of the electromagnet coil (106, 108) of the magnetic bearing (105, 107, 130) can be lowered, and the loss due to switching can be reduced.

A tenth aspect of the present disclosure is an embodiment of the eighth aspect. In the tenth aspect, the another electromagnet coil (108A, 137) is provided in the magnetic bearing (107, 130), bias current is supplied to the electromagnet coil (108B, 136), and a direction of electromagnetic force generated on the rotary shaft (101) by energizing the electromagnet coil (108B, 136) and a direction of electromagnetic force generated on the rotary shaft (101) by energizing the another electromagnet coil (108A, 137) are identical to each other.

In the tenth aspect, the switching frequency of the electromagnet coil (108B, 136) of the magnetic bearing (105, 107, 130) can be lowered, and the loss due to switching can be reduced.

An eleventh aspect of the present disclosure is an embodiment of any one of the first to tenth aspects. In the eleventh aspect, the magnetic bearing (105, 107, 130) is a thrust magnetic bearing or a radial magnetic bearing.

In the eleventh aspect, the cost of the inverter can be reduced in the magnetic bearing system (100) having the thrust magnetic bearing or the radial magnetic bearing.

A twelfth aspect of the present disclosure is directed to a compressor including the magnetic bearing system (100) of any one of the first to eleventh aspects.

In the twelfth aspect, the cost of the inverter can be reduced in the magnetic bearing system (100) forming the compressor (10), and therefore, the compressor (10) can be manufactured at low cost.

A thirteenth aspect of the present disclosure is directed to a refrigeration apparatus including the compressor (10) of the twelfth aspect.

In the thirteenth aspect, the cost of the inverter can be reduced in the magnetic bearing system (100) forming the compressor (10) used for the refrigeration apparatus, and therefore, the refrigeration apparatus can be manufactured at low cost.

BRIEF DESCRIPTION OF THE DRAWINGS

[FIG. 1] FIG. 1 is a schematic view of a compressor including a magnetic bearing system of a first embodiment.

[FIG. 2] FIG. 2 is a diagram illustrating a circuit configuration of the magnetic bearing system of the first embodiment.

[FIG. 3] FIG. 3 is a diagram illustrating the circuit configuration of the magnetic bearing system of the first embodiment.

[FIG. 4] FIG. 4 is a diagram illustrating a circuit configuration of a magnetic bearing system of a first variation of the first embodiment.

[FIG. 5] FIG. 5 is a diagram illustrating the circuit configuration of the magnetic bearing system of the first variation of the first embodiment.

[FIG. 6] FIG. 6 is a diagram illustrating a circuit configuration of a magnetic bearing system of a second variation of the first embodiment.

[FIG. 7] FIG. 7 is a diagram illustrating the circuit configuration of the magnetic bearing system of the second variation of the first embodiment.

[FIG. 8] FIG. 8 is a schematic view of a compressor including a magnetic bearing system of a second embodiment.

[FIG. 9] FIG. 9 is a diagram illustrating a circuit configuration of the magnetic bearing system of the second embodiment.

[FIG. 10] FIG. 10 is a schematic view of a compressor including a magnetic bearing system of a first variation of the second embodiment.

[FIG. 11] FIG. 11 is a diagram illustrating a circuit configuration of the magnetic bearing system of the first variation of the second embodiment.

[FIG. 12] FIG. 12 is a diagram illustrating a circuit configuration of a magnetic bearing system of a second variation of the second embodiment.

[FIG. 13] FIG. 13 is a diagram illustrating the circuit configuration of the magnetic bearing system of the second variation of the second embodiment.

[FIG. 14] FIG. 14 is a schematic view of a compressor including a magnetic bearing system of a third variation of the second embodiment.

[FIG. 15] FIG. 15 is a diagram illustrating a circuit configuration of the magnetic bearing system of the third variation of the second embodiment.

[FIG. 16] FIG. 16 is a diagram illustrating the circuit configuration of the magnetic bearing system of the third variation of the second embodiment.

[FIG. 17] FIG. 17 is a schematic view of a cross section perpendicular to an axial direction in a radial magnetic bearing provided in a magnetic bearing system of a third embodiment.

[FIG. 18] FIG. 18 is a diagram illustrating a circuit configuration of the magnetic bearing system of the third embodiment.

[FIG. 19] FIG. 19 is a schematic view of a cross section perpendicular to an axial direction in a radial magnetic bearing provided in a magnetic bearing system of a variation of the third embodiment.

[FIG. 20] FIG. 20 is a schematic view of a cross section perpendicular to an axial direction in a CPM motor.

[FIG. 21] FIG. 21 is a view of arrangement of motor windings of the CPM motor illustrated in FIG. 20.

[FIG. 22] FIG. 22 is a view of arrangement of support windings of the CPM motor illustrated in FIG. 20.

[FIG. 23] FIG. 23 is a view of support force interference angle in the CPM motor illustrated in FIG. 20.

[FIG. 24] FIG. 24 is a graph illustrating the influence of a zero phase current on support force in an x-axis direction, support force in a y-axis direction, and the support force interference angle in the CPM motor illustrated in FIG. 20.

[FIG. 25] FIG. 25 is a graph illustrating a change in the first-order, third-order, and fifth-order support winding coefficients with respect to a winding pitch in the CPM motor illustrated in FIG. 20.

[FIG. 26] FIG. 26 is a view of the arrangement of support windings of a CPM motor forming a magnetic bearing system of a fourth embodiment.

[FIG. 27] FIG. 27 is a graph illustrating the influence of a zero phase current on support force in an x-axis direction and a support force interference angle in the CPM motor forming the magnetic bearing system of the fourth embodiment.

[FIG. 28] FIG. 28 is a schematic view of a cross section perpendicular to an axial direction in an SPM motor.

[FIG. 29] FIG. 29 is a view of the arrangement of motor windings of the SPM motor illustrated in FIG. 28.

[FIG. 30] FIG. 30 is a view of the arrangement of support windings of the SPM motor illustrated in FIG. 28.

[FIG. 31] FIG. 31 is a graph illustrating the influence of a zero phase current on support force in an x-axis direction, support force in a y-axis direction, and a support force interference angle in the SPM motor illustrated in FIG. 28.

[FIG. 32] FIG. 32 is a view of the arrangement of support windings of an SPM motor forming a magnetic bearing system of a variation of the fourth embodiment.

[FIG. 33] FIG. 33 is a graph illustrating the influence of a zero phase current on support force in an x-axis direction, support force in a y-axis direction, and a support force interference angle in the SPM motor forming the magnetic bearing system of the variation of the fourth embodiment.

[FIG. 34] FIG. 34 is a schematic configuration diagram of an air conditioner (an example of a refrigeration apparatus) of a fifth embodiment.

[FIG. 35] FIG. 35 is a diagram illustrating a circuit configuration of a first example of a magnetic bearing system of another embodiment.

[FIG. 36] FIGS. 36A and 36B show diagrams illustrating circuit configurations of second and third examples of magnetic bearing systems of other embodiments.

[FIG. 37] FIG. 37 is a schematic view of a compressor including a fourth example of a magnetic bearing system of another embodiment.

[FIG. 38] FIG. 38 is a schematic view of a compressor including a fifth example of a magnetic bearing system of another embodiment.

[FIG. 39] FIG. 39 is a diagram illustrating a circuit configuration of the fifth example of the magnetic bearing system of the another embodiment.

DESCRIPTION OF EMBODIMENTS

Embodiments of the present disclosure will be described below with reference to the drawings. The embodiments below are merely exemplary ones in nature, and are not intended to limit the scope, applications, or use of the invention. In the drawings, the same reference numerals denote the same components, but the dimensions in the drawings, such as a length, a width, a thickness, and a depth, are changed as necessary from the actual scales for the sake of clarity and simplicity of the drawings, and may not correspond to the actual relative dimensions.

(First Embodiment)

<Configuration of Magnetic Bearing System>

Hereinafter, the case where a magnetic bearing system (100) of a first embodiment is provided inside a pressure vessel (150) to form a compressor (10) will be described as an example, but the application of the magnetic bearing system (100) is not particularly limited.

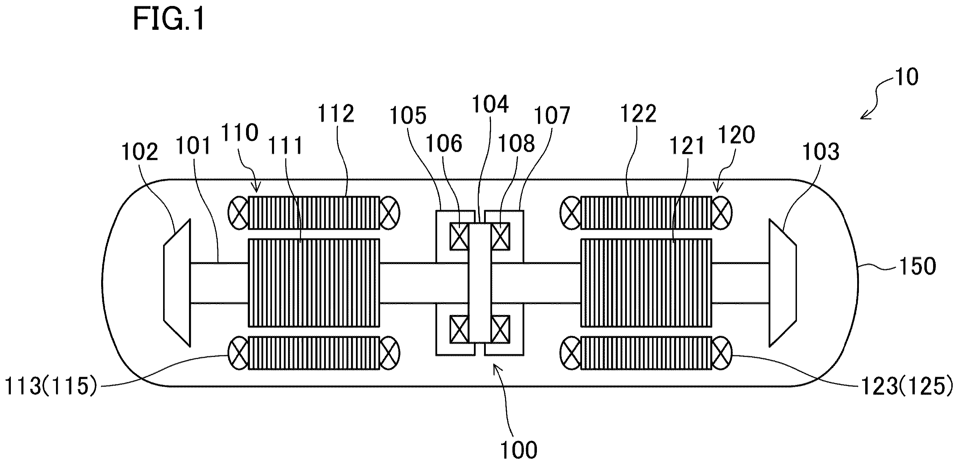

As illustrated in FIG. 1, the magnetic bearing system (100) mainly includes a rotary shaft (101), a thrust magnetic bearing (105, 107), and a bearingless motor (110, 120). In the following description, a direction along the axis of the rotary shaft (101) will be referred to as an axial direction, a direction along a circle centered on the rotary shaft (101) will be referred to as a circumferential direction, and a direction perpendicular to the axis of the rotary shaft (101) will be referred to as a radial direction.

Impellers (102, 103) forming a compression mechanism of the compressor (10) are provided at both ends of the rotary shaft (101) in the axial direction, respectively. Specifically, a first impeller (102) is provided at a front end portion of the rotary shaft (101), and a second impeller (103) is provided at a rear end portion of the rotary shaft (101). That is, the magnetic bearing system (100) is of a back-to-back type. In FIG. 1, elements such as pipes forming the compression mechanism, a control unit, and the like are not illustrated.

The thrust magnetic bearing (105, 107) has a configuration causing electromagnetic force to act on a drive shaft (101) in both directions in the axial direction. Specifically, a disk portion (104) extending in the radial direction is provided at a center portion of the rotary shaft (101) in the axial direction, and a first thrust magnetic bearing (105) that generates electromagnetic force in the axial direction is disposed on the front side of the disk portion (104), and a second thrust magnetic bearing (107) that generates electromagnetic force in the axial direction is disposed on the rear side. Thus, the thrust magnetic bearings (105, 107) can support the disk portion (104) in a non-contact manner using electromagnetic force.

The first thrust magnetic bearing (105) has a first electromagnet coil (106). The second thrust magnetic bearing (107) has a second electromagnet coil (108). The thrust magnetic bearings (105, 107) can control the position of the disk portion (104), i.e., the position of the drive shaft (101), by controlling current flowing through the first and second electromagnet coils (106, 108).

The bearingless motor (110, 120) is configured to rotationally drive the drive shaft (101) using electromagnetic force and to support a radial load on the drive shaft (101) in a non-contact manner. Specifically, a first bearingless motor (110) is disposed between the first impeller (102) and the first thrust magnetic bearing (105) on the rotary shaft (101), and a second bearingless motor (120) is disposed between the second impeller (103) and the second thrust magnetic bearing (105) on the rotary shaft (101).

The first bearingless motor (110) has a first rotor (111) and a first stator (112). The first rotor (111) is fixed to the drive shaft (101). The first stator (112) is fixed to an inner peripheral wall of the pressure vessel (150). A plurality of permanent magnets (not illustrated) is embedded in a core portion of the first rotor (111). The first stator (112) has a plurality of tooth portions (not illustrated), and a first radial support winding (113) and a first motor winding (115) are wound around each tooth portion. The first radial support winding (113) generates shaft support force for supporting the rotary shaft (101) in a non-contact manner by power supply. The first motor winding (115) generates rotation torque on the rotary shaft (101) by power supply. Each of the first radial support winding (113) or the first motor winding (115) is a multi-phase winding having three or more phases (in this example, a three phase winding having a U-phase, a V-phase, and a W-phase).

The second bearingless motor (120) has a second rotor (121) and a second stator (122). The second rotor (121) is fixed to the drive shaft (101). The second stator (122) is fixed to the inner peripheral wall of the pressure vessel (150). A plurality of permanent magnets (not illustrated) is embedded in a core portion of the second rotor (121). The second stator (122) has a plurality of tooth portions (not illustrated), and a second radial support winding (123) and a second motor winding (125) are wound around each tooth portion. The second radial support winding (123) generates shaft support force for supporting the rotary shaft (101) in a non-contact manner by power supply. The second motor winding (125) generates rotation torque on the rotary shaft (101) by power supply. Each of the second radial support winding (123) or the second motor winding (125) is a multi-phase winding having three or more phases (in this example, a three phase winding having a U-phase, a V-phase, and a W-phase).

<Circuit of Magnetic Bearing System>

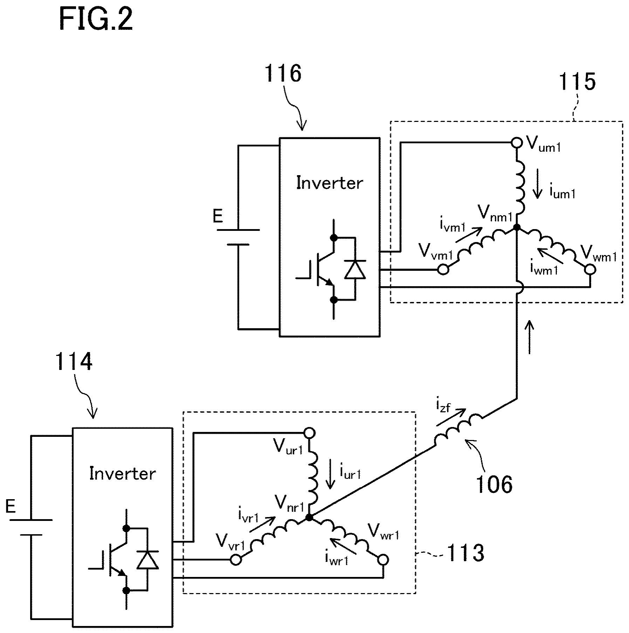

As illustrated in FIG. 2, the first radial support winding (113) of the first bearingless motor (110) is supplied with power from a first inverter (114), and the first motor winding (115) of the first bearingless motor (110) is supplied with power from a second inverter (116). The inverter (114, 116) may be a pulse width modulation (PWM) inverter configured using a switching element, for example. The inverter (114, 116) is electrically disposed outside the pressure vessel (150), and is connected to the winding (113, 115) through a dedicated airtight terminal that electrically connects the inside and outside of the pressure vessel (150). The inverter (114, 116) converts input DC current to generate three phase AC current to be supplied to the winding (113, 115).

In the first radial support winding (113), one ends of the U-phase, V-phase, and W-phase windings are connected at a neutral point. The first inverter (114) applies a voltage $V_{ur1}$ to the other end of the U-phase winding, applies a voltage $V_{vr1}$ to the other end of the V-phase winding, and applies a voltage $V_{wr1}$ to the other end of the W-phase winding. As a result, a radial support current $i_{ur1}$ flows through the U-phase winding, a radial support current $i_{vr1}$ flows through the V-phase winding, and a radial support current $i_{wr1}$ flows through the W-phase winding.

In the first motor winding (115), one ends of the U-phase, V-phase, and W-phase windings are connected at a neutral point. The second inverter (116) applies a voltage $V_{um1}$ to the other end of the U-phase winding, applies a voltage $V_{vm1}$ to the other end of the V-phase winding, and applies a voltage $V_{wm1}$ to the other end of the W-phase winding. As a result, a motor drive current $i_{um1}$ flows through the U-phase winding, a motor drive current $i_{vm1}$ flows through the V-phase winding, and a motor drive current $i_{wm1}$ flows through the W-phase winding.

In the magnetic bearing system (100) of the present embodiment, one end of the first electromagnet coil (106) of the first thrust magnetic bearing (105) is connected to the neutral point of the first radial support winding (113) in the pressure vessel (150), and the other end of the first electromagnet coil (106) is connected to the neutral point of the first motor winding (115) in the pressure vessel (150).

Accordingly, when a predetermined support current $i_{zf}$ is to be applied to the first electromagnet coil (106) of the first thrust magnetic bearing (105), if $i_{zf}/3$ is superimposed on the winding of each phase of the first radial support winding (113) in addition to an original radial support current, the support current $i_{zf}$ can be applied to the first electromagnet coil (106) as a zero phase current. The zero phase current $i_{zf}$ flows through the first electromagnet coil (106), and then flows into the first motor winding (115). Therefore, when the amplitude and phase of the radial support current ($i_{ur1}$, $i_{vr1}$, $i_{wr1}$) are $I_{r1}$ and $\varphi_1$, respectively, and the amplitude and phase of the motor drive current ($i_{um1}$, $i_{vm1}$, $i_{wm1}$) are $I_{m1}$ and $\beta_1$, respectively, if the inverter (114, 116) is controlled such that

$$i_{ur1} = I_{r1} \cdot \sin(\varphi_1) + i_{zf}/3$$

$$i_{vr1} = I_{r1} \cdot \sin(\varphi_1 + 2\pi/3) + i_{zf}/3$$

$$i_{wr1} = I_{r1} \cdot \sin(\varphi_1 + 4\pi/3) + i_{zf}/3$$

$$i_{um1} = I_{m1} \cdot \sin(\beta_1) - i_{zf}/3$$

$$i_{vm1} = I_{m1} \cdot \sin(\beta_1 + 2\pi/3) - i_{zf}/3$$

$$i_{wm1} = I_{m1} \cdot \sin(\beta_1 + 4\pi/3) - i_{zf}/3,$$

the predetermined support current $i_{zf}$ can be applied to the first electromagnet coil (106) of the first thrust magnetic bearing (105) without adding a switching element.

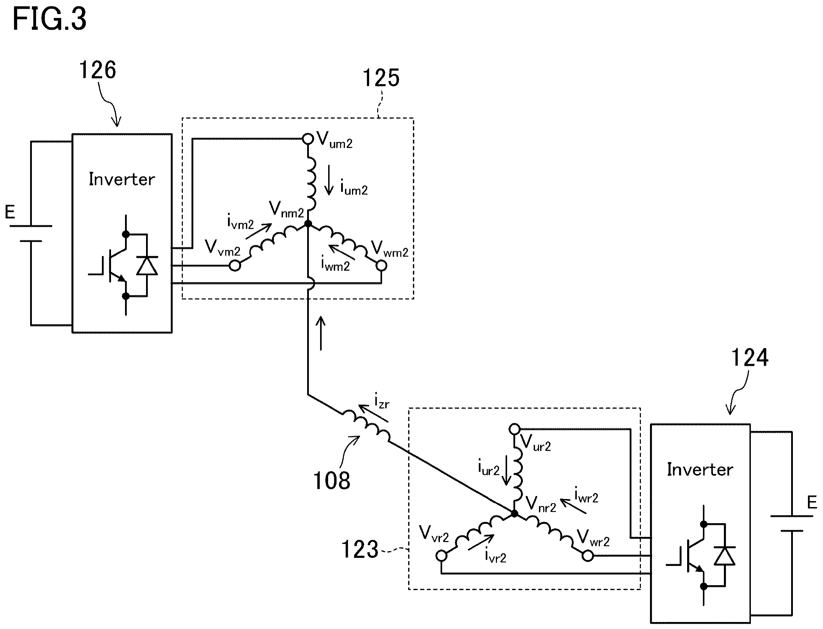

Moreover, as illustrated in FIG. 3, the second radial support winding (123) of the second bearingless motor (120) is supplied with power from a third inverter (124), and the second motor winding (125) of the second bearingless motor (120) is supplied with power from a fourth inverter (126). The inverter (124, 126) is configured using a switching element, for example. The inverter (124, 126) is disposed outside the pressure vessel (150), and is connected to the winding (123, 125) through a dedicated airtight terminal that electrically connects the inside and outside of the pressure vessel (150). The inverter (124, 126) converts input DC current to generate three phase AC current to be supplied to the winding (123, 125).

In the second radial support winding (123), one ends of the U-phase, V-phase, and W-phase windings are connected at a neutral point. The third inverter (124) applies a voltage $V_{ur2}$ to the other end of the U-phase winding, applies a voltage $V_{vr2}$ to the other end of the V-phase winding, and applies a voltage $V_{wr2}$ to the other end of the W-phase winding. As a result, a radial support current $i_{ur2}$ flows through the U-phase winding, a radial support current $i_{vr2}$ flows through the V-phase winding, and a radial support current $i_{wr2}$ flows through the W-phase winding.

In the second motor winding (125), one ends of the U-phase, V-phase, and W-phase windings are connected at a neutral point. The fourth inverter (126) applies a voltage $V_{um2}$ to the other end of the U-phase winding, applies a voltage $V_{vm2}$ to the other end of the V-phase winding, and applies a voltage $V_{wm2}$ to the other end of the W-phase winding. As a result, a motor drive current $i_{um2}$ flows through the U-phase winding, a motor drive current $i_{vm2}$ flows through the V-phase winding, and a motor drive current $i_{wm2}$ flows through the W-phase winding.

In the magnetic bearing system (100) of the present embodiment, one end of the second electromagnet coil (108) of the second thrust magnetic bearing (107) is connected to the neutral point of the second radial support winding (123) in the pressure vessel (150), and the other end of the second electromagnet coil (108) is connected to the neutral point of the second motor winding (125) in the pressure vessel (150).

Accordingly, when a predetermined support current $i_{zr}$ is to be applied to the second electromagnet coil (108) of the second thrust magnetic bearing (107), if $i_{zr}/3$ is superimposed on the winding of each phase of the second radial support winding (123) in addition to an original radial support current, the support current $i_{zr}$ can be applied to the second electromagnet coil (108) as a zero phase current. The zero phase current $i_{zr}$ flows through the second electromagnet coil (108), and then flows into the second motor winding (125). Therefore, when the amplitude and phase of the radial support current ($i_{ur2}$, $i_{vr2}$, $i_{wr2}$) are $I_{r2}$ and $\varphi_2$, respectively, and the amplitude and phase of the motor drive current ($i_{um2}$, $i_{vm2}$, $i_{wm2}$) are $I_{m2}$ and $\beta_2$, respectively, if the inverter (124, 126) is controlled such that

$$i_{ur2} = I_{r2} \cdot \sin(\varphi_2) + i_{zr}/3$$

$$i_{vr2} = I_{r2} \cdot \sin(\varphi_2 + 2\pi/3) + i_{zr}/3$$

$$i_{wr2} = I_{r2} \cdot \sin(\varphi_2 + 4\pi/3) + i_{zr}/3$$

$$i_{um2} = I_{m2} \cdot \sin(\beta_2) - i_{zr}/3$$

$$i_{vm2} = I_{m2} \cdot \sin(\beta_2 + 2\pi/3) - i_{zr}/3$$

$$i_{wm2} = I_{m2} \cdot \sin(\beta_2 + 4\pi/3) - i_{zr}/3,$$

the predetermined support current $i_{zr}$ can be applied to the second electromagnet coil (108) of the second thrust magnetic bearing (107) without adding a switching element.

In the examples illustrated in FIGS. 2 and 3, the support current $i_{zf}$, $i_{zr}$ is applied from the radial support winding (113, 123) to the motor winding (115, 125), and the direction in which the support current $i_{zf}$, $i_{zr}$ flows and the magnitude of the support current $i_{zf}$, $i_{zr}$ can be adjusted by controlling the voltages of the radial support winding (113, 123) and the motor winding (115, 125) by the inverter (114, 116) and the inverter (124, 126).

<Features of Embodiments>

As described above, in the present embodiment, one end of the electromagnet coil (106, 108) of the thrust magnetic bearing (105, 107) is connected to the neutral point of the radial support winding (113, 123) which is the multi-phase winding having three or more phases. Thus, by adjusting the current of the radial support winding (113, 123), the voltage applied to one end of the electromagnet coil (106, 108) of the thrust magnetic bearing (105, 107) can be adjusted. The other end of the electromagnet coil (106, 108) of the thrust magnetic bearing (105, 107) is connected to the neutral point of the motor winding (115, 125) which is the multi-phase winding having three or more phases. Thus, by adjusting the current of the motor winding (115, 125), the voltage applied to the other end of the electromagnet coil (106, 108) of the thrust magnetic bearing (105, 107) can be adjusted. Consequently, it is not necessary to provide dedicated switching elements for voltage adjustment at both ends of the electromagnet coil (106, 108) of the magnetic bearing (105, 107). That is, it is not necessary to provide an inverter for the thrust magnetic bearing (105, 107), and therefore, the cost of the inverter can be reduced.

In the present embodiment, one end of the first electromagnet coil (106) of the first thrust magnetic bearing (105) is connected to the neutral point of the first radial support winding (113) of the first bearingless motor (110), and the other end of the first electromagnet coil (106) is connected to the neutral point of the first motor winding (115) of the first bearingless motor (110). Thus, using the single first bearingless motor (110), the first electromagnet coil (106) of the first thrust magnetic bearing (105) can be operated without adding a switching element.

In the present embodiment, one end of the second electromagnet coil (108) of the second thrust magnetic bearing (107) is connected to the neutral point of the second radial support winding (123) of the second bearingless motor (120), and the other end of the second electromagnet coil (108) is connected to the neutral point of the second motor winding (125) of the second bearingless motor (120). Thus, using the single second bearingless motor (120), the second electromagnet coil (108) of the second thrust magnetic bearing (107) can be operated without adding a switching element.

In the present embodiment, one end of the electromagnet coil (106, 108) of the thrust magnetic bearing (105, 107) is connected to the neutral point of the radial support winding (113, 123) in the pressure vessel (150), and the other end of the electromagnet coil (106, 108) is connected to the neutral point of the motor winding (115, 125) in the pressure vessel (150). Thus, it is not necessary to provide a dedicated airtight terminal that electrically connects the inside and outside of the pressure vessel (150) in order to apply voltage to the electromagnet coil (106, 108) of the thrust magnetic bearing (105, 107), and therefore, not only the cost of the inverter but also the cost of the airtight terminal can be reduced.

In the compressor (10) including the magnetic bearing system (100) of the present embodiment, the cost of the inverter can be reduced, and therefore, the compressor (10) can be manufactured at low cost.

(First Variation of First Embodiment)

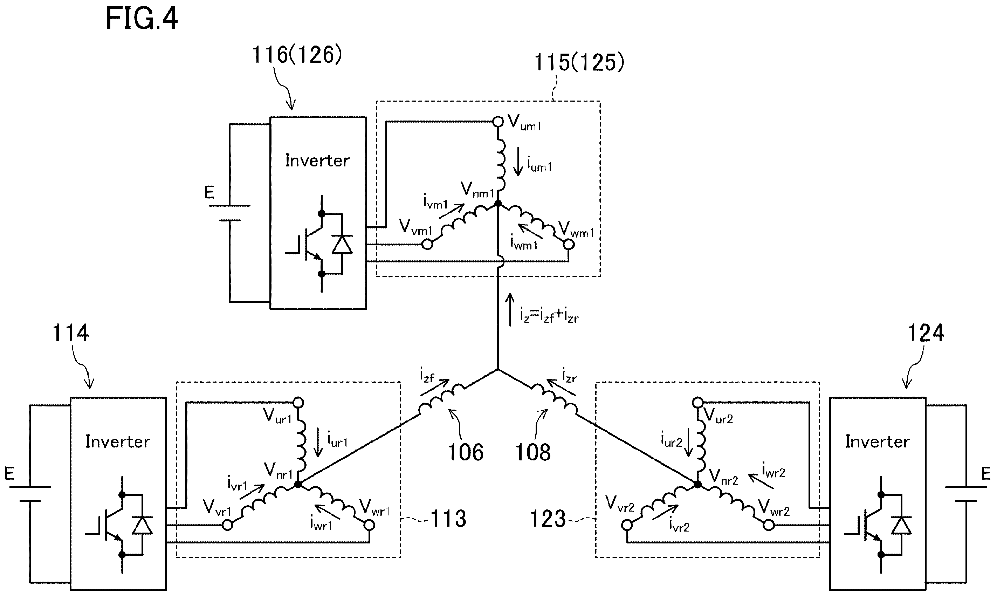

The present variation is different from the first embodiment in that as illustrated in FIG. 4, the neutral point of one motor winding (first motor winding (115) or second motor winding (125)) and the neutral points of two radial support windings (first radial support winding (113) and second radial support winding (123)) are connected through the first electromagnet coil (106) of the first thrust magnetic bearing (105) or the second electromagnet coil (108) of the second thrust magnetic bearing (107). In FIG. 4, the same reference numerals are used to denote the same elements as those in the first embodiment illustrated in FIGS. 2 and 3.

In the present variation, when the predetermined support current $i_{zf}$ is to be applied to the first electromagnet coil (106) of the first thrust magnetic bearing (105), if $i_{zf}/3$ is superimposed on the winding of each phase of the first radial support winding (113) in addition to the original radial support current, the support current $i_{zf}$ can be applied to the first electromagnet coil (106) as the zero phase current. Moreover, when the predetermined support current $i_{zr}$ is to be applied to the second electromagnet coil (108) of the second thrust magnetic bearing (107), if $i_{zr}/3$ is superimposed on the winding of each phase of the second radial support winding (123) in addition to the original radial support current, the support current $i_{zr}$ can be applied to the second electromagnet coil (108) as the zero phase current.

The zero phase currents $i_{zf}$, $i_{zr}$ flow through the first electromagnet coil (106) and the second electromagnet coil (108), respectively, and then a current $i_z$ obtained by adding up these currents flows into the first motor winding (115) or the second motor winding (125). Therefore, when the amplitude and phase of the radial support current ($i_{ur1}$, $i_{vr1}$, $i_{wr1}$) of the first radial support winding (113) are $I_{r1}$ and $\varphi_1$, respectively, the amplitude and phase of the radial support current ($i_{ur2}$, $i_{vr2}$, $i_{wr2}$) of the second radial support winding (123) are $I_{r2}$ and $\varphi_2$, respectively, and the amplitude and phase of the motor drive current ($i_{um1}$, $i_{vm1}$, $i_{wm1}$) of the first motor winding (115) or the second motor winding (125) are $I_{m1}$ and $\beta_1$, respectively, if the inverter (114, 116, 124, 126) is controlled such that

$$i_{ur1} = I_{r1} \cdot \sin(\varphi_1) + i_{zf}/3$$

$$i_{vr1} = I_{r1} \cdot \sin(\varphi_1 + 2\pi/3) + i_{zf}/3$$

$$i_{wr1} = I_{r1} \cdot \sin(\varphi_1 + 4\pi/3) + i_{zf}/3$$

$$i_{ur2} = I_{r2} \cdot \sin(\varphi_2) + i_{zr}/3$$

$$i_{vr2} = I_{r2} \cdot \sin(\varphi_2 + 2\pi/3) + i_{zr}/3$$

$$i_{wr2} = I_{r2} \cdot \sin(\varphi_2 + 4\pi/3) + i_{zr}/3$$

$$i_{um1} = I_{m1} \cdot \sin(\beta_1) - i_z$$

$$i_{vm1} = I_{m1} \cdot \sin(\beta_1 + 2\pi/3) - i_z$$

$$i_{wm1} = I_{m1} \cdot \sin(\beta_1 + 4\pi/3) - i_z$$

(where
$i_z = i_{zf} + i_{zr}$),
the predetermined support current $i_{zf}$ can be applied to the first electromagnet coil (106) of the first thrust magnetic bearing (105) and the predetermined support current $i_{zr}$ can be applied to the second electromagnet coil (108) of the second thrust magnetic bearing (107) without adding a switching element.

As described above, in the present variation, the electromagnet coils (106, 108) of the two magnetic bearings (105, 107) are operated using the two bearingless motors (110, 120) without adding a switching element, thereby obtaining effects similar to those of the first embodiment.

In the present variation, the neutral point of one motor winding (first motor winding

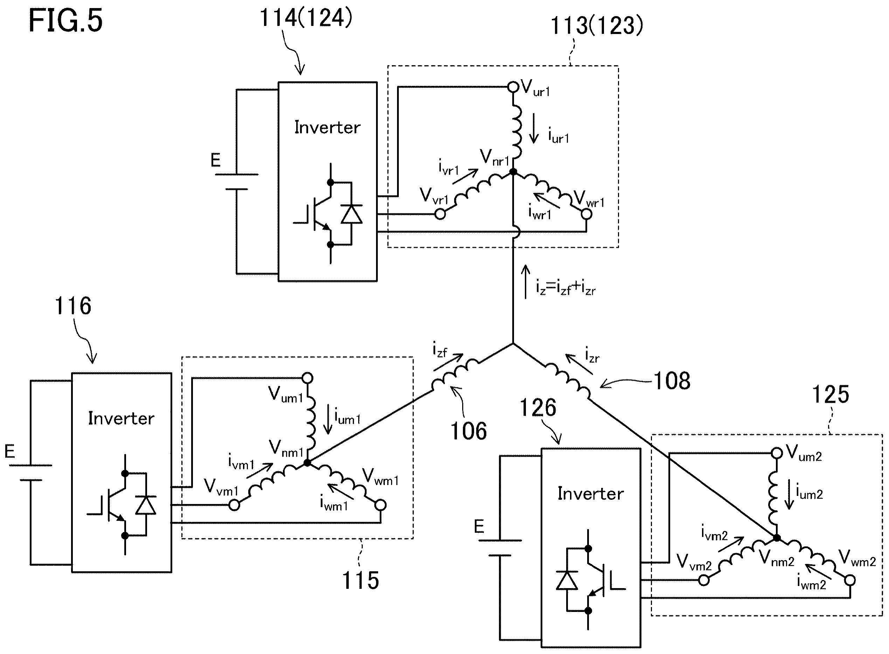

(115) or second motor winding (125)) and the neutral points of two radial support windings (first radial support winding (113) and second radial support winding (123)) are connected through the first electromagnet coil (106) of the first thrust magnetic bearing (105) or the second electromagnet coil (108) of the second thrust magnetic bearing (107). However, instead, as illustrated in FIG. 5, even when the neutral point of one radial support winding (first radial support winding (113) or second radial support winding (123)) and the neutral points of two motor windings (first motor winding (115) and second motor winding (125)) are connected through the first electromagnet coil (106) of the first thrust magnetic bearing (105) or the second electromagnet coil (108) of the second thrust magnetic bearing (107), effects similar to those of the present variation can also be obtained.

(Second Variation of First Embodiment)

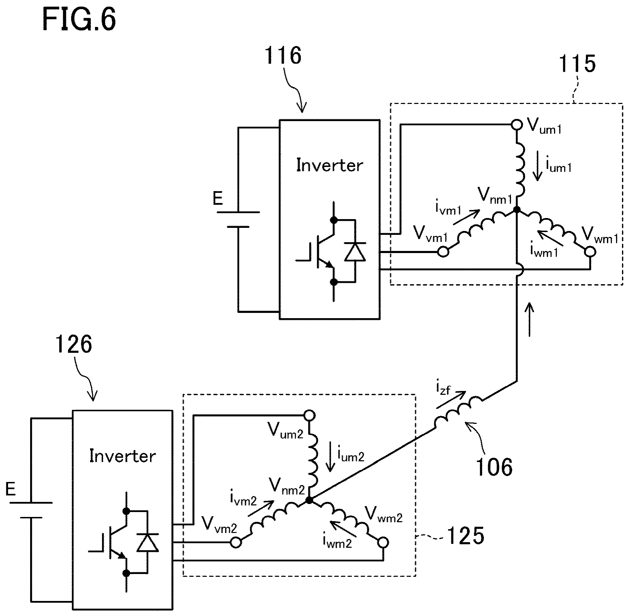

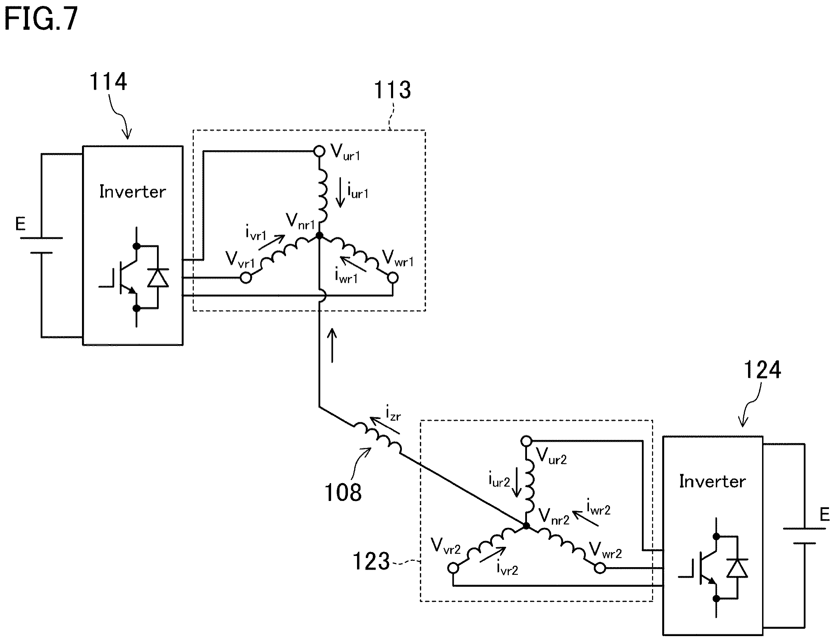

The present variation is different from the first embodiment in that the neutral point of the first motor winding (115) and the neutral point of the second motor winding (125) are connected through the first electromagnet coil (106) of the first thrust magnetic bearing (105) as illustrated in FIG. 6, and the neutral point of the first radial support winding (113) and the neutral point of the second radial support winding (123) are connected through the second electromagnet coil (108) of the second thrust magnetic bearing (107) as illustrated in FIG. 7. In FIGS. 6 and 7, the same reference numerals are used to denote the same elements as those in the first embodiment illustrated in FIGS. 2 and 3.

In the present variation, when the predetermined support current $i_{zf}$ is to be applied to the first electromagnet coil (106) of the first thrust magnetic bearing (105), if $i_{zf}/3$ is superimposed on the winding of each phase of the second motor winding (125) in addition to an original motor drive current, the support current $i_{zf}$ can be applied to the first electromagnet coil (106) as the zero phase current. The zero phase current $i_{zf}$ flows through the first electromagnet coil (106), and then flows into the first motor winding (115). Therefore, when the amplitude and phase of the motor drive current ($i_{um2}$, $i_{vm2}$, $i_{wm2}$) of the second motor winding (125) are $I_{m2}$ and $\beta_2$, respectively, and the amplitude and phase of the motor drive current ($i_{um1}$, $i_{vm1}$, $i_{wm1}$) of the first motor winding (115) are $I_{m1}$ and $\beta_1$, respectively, if the inverter (116, 126) is controlled such that

$$i_{um2} = I_{m2} \cdot \sin(\beta_2) + i_{zf}/3$$

$$i_{vm2} = I_{m2} \cdot \sin(\beta_2 + 2\pi/3) + i_{zf}/3$$

$$i_{wm2} = I_{m2} \cdot \sin(\beta_2 + 4\pi/3) + i_{zf}/3$$

$$i_{um1} = I_{m1} \cdot \sin(\beta_1) - i_{zf}/3$$

$$i_{vm1} = I_{m1} \cdot \sin(\beta_1 + 2\pi/3) - i_{zf}/3$$

$$i_{wm1} = I_{m1} \cdot \sin(\beta_1 + 4\pi/3) - i_{zf}/3,$$

the predetermined support current $i_{zf}$ can be applied to the first electromagnet coil (106) of the first thrust magnetic bearing (105) without adding a switching element.

Moreover, when the predetermined support current $i_{zr}$ is to be applied to the second electromagnet coil (108) of the second thrust magnetic bearing (107), if $i_{zr}/3$ is superimposed on the winding of each phase of the second radial support winding (123) in addition to the original radial support current, the support current $i_{zr}$ can be applied to the second electromagnet coil (108) as the zero phase current. The zero phase current $i_{zr}$ flows through the second electromagnet coil (108), and then flows into the first radial support winding (113). Therefore, when the amplitude and phase of the radial support current ($i_{ur2}$, $i_{vr2}$, $i_{wr2}$) of the second radial support winding (123) are $I_{r2}$ and $\varphi_2$, respectively, and the amplitude and phase of the radial support current ($i_{ur1}$, $i_{vr1}$, $i_{wr1}$) of the first radial support winding (113) are $I_{r1}$ and $\varphi_1$, respectively, if the inverter (114, 124) is controlled such that

$$i_{ur2} = I_{r2} \cdot \sin(\varphi_2) + i_{zr}/3$$

$$i_{vr2} = I_{r2} \cdot \sin(\varphi_2 + 2\pi/3) + i_{zr}/3$$

$$i_{wr2} = I_{r2} \cdot \sin(\varphi_2 + 4\pi/3) + i_{zr}/3$$

$$i_{ur1} = I_{r1} \cdot \sin(\varphi_1) - i_{zr}/3$$

$$i_{vr1} = I_{r1} \cdot \sin(\varphi_1 + 2\pi/3) - i_{zr}/3$$

$$i_{wr1} = I_{r1} \cdot \sin(\varphi_1 + 4\pi/3) - i_{zr}/3,$$

the predetermined support current $i_{zr}$ can be applied to the second electromagnet coil (108) of the second thrust magnetic bearing (107) without adding a switching element.

As described above, in the present variation, the electromagnet coils (106, 108) of the two magnetic bearings (105, 107) are operated using the two bearingless motors (110, 120) without adding a switching element, thereby obtaining effects similar to those of the first embodiment.

In the examples illustrated in FIGS. 6 and 7, the support current $i_{zf}$ is applied from the second motor winding (125) to the first motor winding (115), and the support current $i_{zr}$ is applied from second radial support winding (123) to the first radial support winding (113), but the direction in which the support current $i_{zf}$, $i_{zr}$ flows and the magnitude of the support current $i_{zf}$, $i_{zr}$ can be adjusted by controlling the voltages of the motor winding (115, 125) and the radial support winding (113, 123) by the inverter (114, 116, 124, 126).

(Second Embodiment)

<Configuration of Magnetic Bearing System>

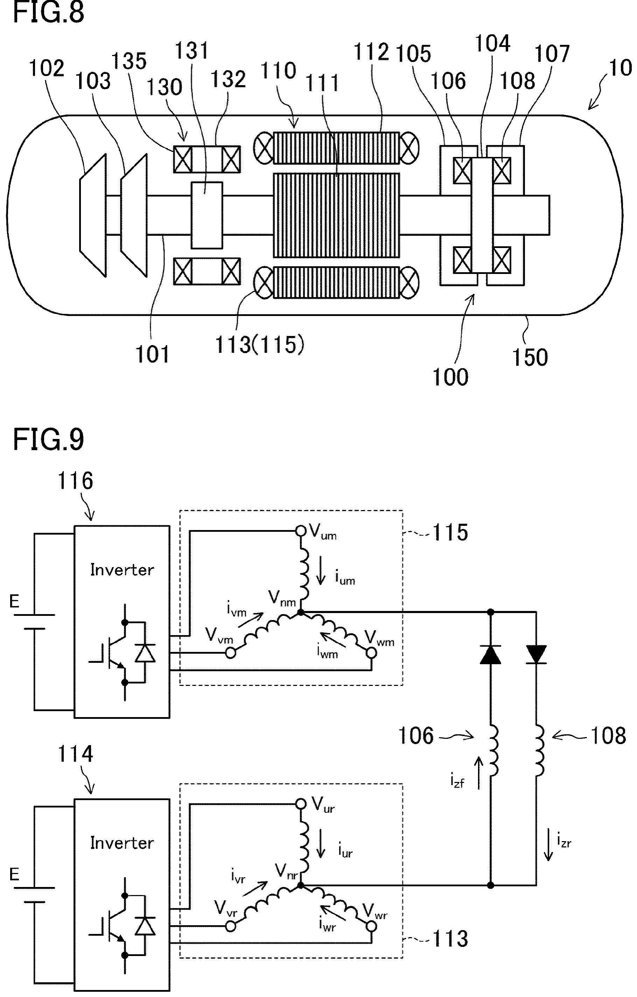

The magnetic bearing system (100) of the present embodiment is different from that of the first embodiment in that as illustrated in FIG. 8, the first impeller (102) and the second impeller (103) are provided at the front end portion of the rotary shaft (101), the thrust magnetic bearing (105, 107) is provided at the rear end portion of the rotary shaft (101), and a radial magnetic bearing (130) is provided instead of the second bearingless motor (120). That is, the magnetic bearing system (100) of the present embodiment is not of the back-to-back type as in the first embodiment. In FIG. 8, the same reference numerals are used to denote the same elements as those in the first embodiment illustrated in FIG. 1.

In the example illustrated in FIG. 8, the first bearingless motor (110) and the radial magnetic bearing (130) are disposed in the axial direction of the rotary shaft (101), the first bearingless motor (110) is located on the rear side of the rotary shaft (101), and the radial magnetic bearing (130) is located on the front side of the rotary shaft (101).

The radial magnetic bearing (130) is configured to support the radial load on the drive shaft (101) in a non-contact manner. The radial magnetic bearing (130) is fixed to the inner peripheral wall of the pressure vessel (150). The diameter of a portion (131) of the rotary shaft (101) facing the radial magnetic bearing (130) may be greater than the diameters of other portions. The radial magnetic bearing (130) includes a stator (132) having a plurality of tooth portions (not illustrated), and an electromagnet coil (135) wound around each tooth portion.

<Circuit of Magnetic Bearing System>

The circuit of the magnetic bearing system (100) of the present embodiment is different from that of the first embodiment in that as illustrated in FIG. 9, the first electromagnet coil

(106) of the first thrust magnetic bearing (105) and the second electromagnet coil (108) of the second thrust magnetic bearing (107) are connected in parallel between the neutral point of the first motor winding (115) of the first bearingless motor (110) and the neutral point of the first radial support winding (113) of the first bearingless motor (110). In FIG. 9, the same reference numerals are used to denote the same elements as those in the first embodiment illustrated in FIGS. 2 and 3.

In the present embodiment, when the predetermined support current $i_{zf}$ is to be applied to the first electromagnet coil (106) of the first thrust magnetic bearing (105), if $i_{zf}/3$ is superimposed on the winding of each phase of the first radial support winding (113) in addition to the original radial support current, the support current $i_{zf}$ can be applied to the first electromagnet coil (106) as the zero phase current. The zero phase current $i_{zf}$ flows through the first electromagnet coil (106), and then flows into the first motor winding (115). Therefore, when the amplitude and phase of the radial support current ($i_{ur}$, $i_{vr}$, $i_{wr}$) are $I_r$ and $\varphi$, respectively, and the amplitude and phase of the motor drive current ($i_{um}$, $i_{vm}$, $i_{wm}$) are $I_m$ and $\beta$, respectively, if the inverter (114, 116) is controlled such that

$$i_{ur} = I_r \cdot \sin(\varphi) + i_{zf}/3$$

$$i_{vr} = I_r \cdot \sin(\varphi + 2\pi/3) + i_{zf}/3$$

$$i_{wr} = I_r \cdot \sin(\varphi + 4\pi/3) + i_{zf}/3$$

$$i_{um} = I_m \cdot \sin(\beta) - i_{zf}/3$$

$$i_{vm} = I_m \cdot \sin(\beta + 2\pi/3) - i_{zf}/3$$

$$i_{wm} = I_m \cdot \sin(\beta + 4\pi/3) - i_{zf}/3,$$

the predetermined support current $i_{zf}$ can be applied to the first electromagnet coil (106) of the first thrust magnetic bearing (105) without adding a switching element.

On the other hand, when the predetermined support current $i_{zr}$ is to be applied to the second electromagnet coil (108) of the second thrust magnetic bearing (107), if $i_{zr}/3$ is superimposed on the winding of each phase of the first motor winding (115) in addition to the original motor drive current, the support current $i_{zr}$ can be applied to the second electromagnet coil (108) as the zero phase current. The zero phase current $i_{zr}$ flows through the second electromagnet coil (108), and then flows into the first radial support winding (113). Therefore, when the amplitude and phase of the motor drive current ($i_{um}$, $i_{vm}$, $i_{wm}$) are $I_m$ and $\beta$, respectively, and the amplitude and phase of the radial support current ($i_{ur}$, $i_{vr}$, $i_{wr}$) are $I_r$ and $\varphi$, respectively, if the inverter (114, 116) is controlled such that

$$i_{um} = I_m \cdot \sin(\beta) + i_{zr}/3$$

$$i_{vm} = I_m \cdot \sin(\beta + 2\pi/3) + i_{zr}/3$$

$$i_{wm} = I_m \cdot \sin(\beta + 4\pi/3) + i_{zr}/3$$

$$i_{ur} = I_r \cdot \sin(\varphi) - i_{zr}/3$$

$$i_{vr} = I_r \cdot \sin(\varphi + 2\pi/3) - i_{zr}/3$$

$$i_{wr} = I_r \cdot \sin(\varphi + 4\pi/3) - i_{zr}/3,$$

the predetermined support current $i_{zr}$ can be applied to the second electromagnet coil (108) of the second thrust magnetic bearing (107) without adding a switching element.

In the example illustrated in FIG. 9, the direction and magnitude of current flowing between the neutral point of the first motor winding (115) and the neutral point of the first radial support winding (113) can be adjusted by controlling the voltages of the radial support winding (113) and the motor winding (115) by the inverter (114, 116).

As described above, according to the present embodiment, effects similar to those of the first embodiment can also be obtained in the magnetic bearing system (100) of a type other than the back-to-back type using two bearingless motors.

(First Variation of Second Embodiment)

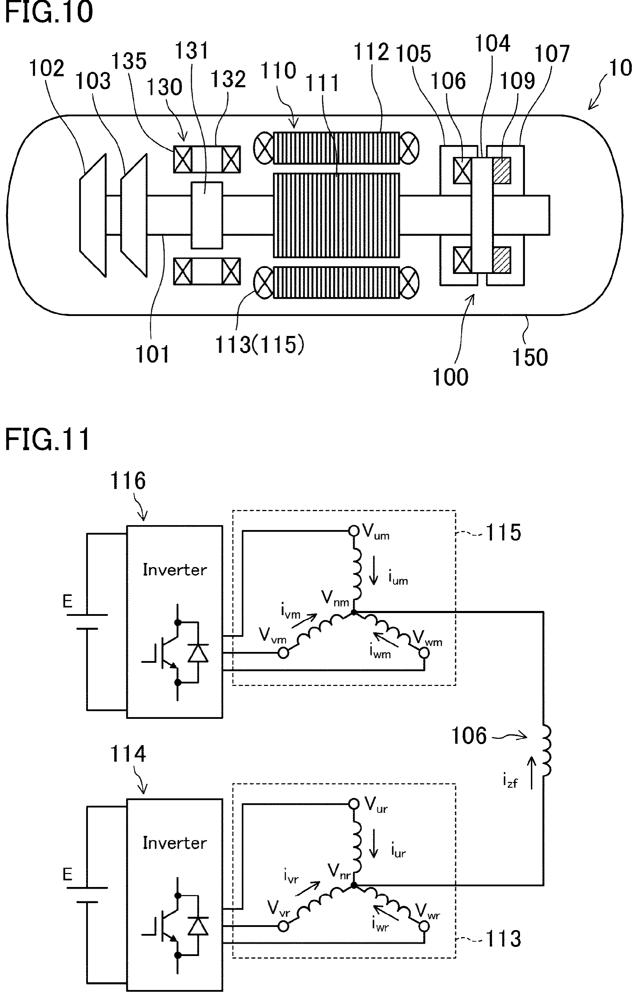

The magnetic bearing system (100) of the present variation is different from that of the second embodiment in that as illustrated in FIGS. 10 and 11, a magnet (109) is provided instead of the second electromagnet coil (108) in the second thrust magnetic bearing (107) and only the first electromagnet coil (106) of the first thrust magnetic bearing (105) is connected between the neutral point of the first motor winding (115) of the first bearingless motor (110) and the neutral point of the first radial support winding (113) of the first bearingless motor (110). That is, the electromagnetic force in the axial direction, which is generated on the rear side by the second thrust magnetic bearing (107), is constant, and the position of the disk portion (104), i.e., the position of the drive shaft (101), is controlled by controlling the current flowing through the first electromagnet coil (106) of the first thrust magnetic bearing (105). In FIGS. 10 and 11, the same reference numerals are used to denote the same elements as those in the second embodiment illustrated in FIGS. 8 and 9.

In the present variation, when the predetermined support current $i_{zf}$ is to be applied to the first electromagnet coil (106) of the first thrust magnetic bearing (105), if $i_{zf}/3$ is superimposed on the winding of each phase of the first radial support winding (113) in addition to the original radial support current, the support current $i_{zf}$ can be applied to the first electromagnet coil (106) as the zero phase current. The zero phase current $i_{zf}$ flows through the first electromagnet coil (106), and then flows into the first motor winding (115). Therefore, when the amplitude and phase of the radial support current ($i_{ur}$, $i_{vr}$, $i_{wr}$) are $I_r$ and $\varphi$, respectively, and the amplitude and phase of the motor drive current ($i_{um}$, $i_{vm}$, $i_{wm}$) are $I_m$ and $\beta$, respectively, if the inverter (114, 116) is controlled such that

$$i_{ur} = I_r \cdot \sin(\varphi) + i_{zf}/3$$

$$i_{vr} = I_r \cdot \sin(\varphi + 2\pi/3) + i_{zf}/3$$

$$i_{wr} = I_r \cdot \sin(\varphi + 4\pi/3) + i_{zf}/3$$

$$i_{um} = I_m \cdot \sin(\beta) - i_{zf}/3$$

$$i_{vm} = I_m \cdot \sin(\beta + 2\pi/3) - i_{zf}/3$$

$$i_{wm} = I_m \cdot \sin(\beta + 4\pi/3) - i_{zf}/3,$$

the predetermined support current $i_{zf}$ can be applied to the first electromagnet coil (106) of the first thrust magnetic bearing (105) without adding a switching element.

According to the present variation described above, effects similar to those of the first embodiment can be obtained in the magnetic bearing system (100) of a type other than the back-to-back type without providing a diode as in the second embodiment illustrated in FIG. 9.

In the example illustrated in FIG. 11, the support current $i_{zf}$ is applied from the radial support winding (113) to the motor winding (115), but the direction in which the support current $i_{zf}$ flows and the magnitude of the support current $i_{zf}$ can be adjusted by controlling the voltages of the radial support winding (113) and the motor winding (115) by the inverter (114, 116).

In the present variation, the magnet (109) is provided in the second thrust magnetic bearing (107), but instead, a magnet may be provided in the first thrust magnetic bearing (105), and second electromagnet coil (108) of the second thrust magnetic bearing (107) may be connected between the neutral point of the first motor winding (115) of the first bearingless motor (110) and the neutral point of the first radial support winding (113) of the first bearingless motor (110). That is, the electromagnetic force in the axial direction, which is generated on the front side by the first thrust magnetic bearing (105), may be constant, and the position of the disk portion (104), i.e., the position of the drive shaft (101), is controlled by controlling the current flowing through the second electromagnet coil (108) of the second thrust magnetic bearing (107).

(Second Variation of Second Embodiment)

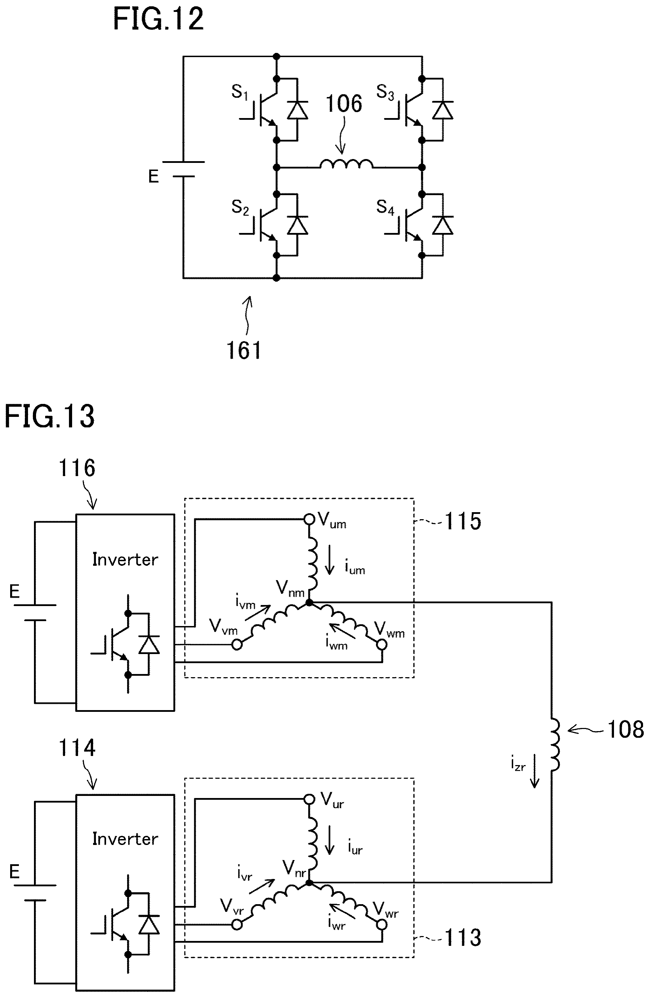

The magnetic bearing system (100) of the present variation is different from that of the second embodiment in that power is supplied from a dedicated power module (161) to the first electromagnet coil (106) of the first thrust magnetic bearing (105) as illustrated in FIG. 12 while the second electromagnet coil (108) of the second thrust magnetic bearing (107) is connected between the neutral point of the first motor winding (115) of the first bearingless motor (110) and the neutral point of the first radial support winding (113) of the first bearingless motor (110) as illustrated in FIG. 13. Here, bias current is supplied to the second electromagnet coil (108). That is, the electromagnetic force in the axial direction, which is generated on the rear side by the second thrust magnetic bearing (107), is constant, and the position of the disk portion (104), i.e., the position of the drive shaft (101), is controlled by controlling, using an inverter (161), the current flowing through the first electromagnet coil (106) of the first thrust magnetic bearing (105). In FIGS. 12 and 13, the same reference numerals are used to denote the same elements as those in the second embodiment illustrated in FIGS. 8 and 9.

In the present variation, when a predetermined bias current $i_{zr}$ is to be applied to the second electromagnet coil (108) of the second thrust magnetic bearing (107), if $i_{zr}/3$ is superimposed on the winding of each phase of the first motor winding (115) in addition to the original motor drive current, the bias current $i_{zr}$ can be applied to the second electromagnet coil (108) as the zero phase current. The zero phase current $i_{zr}$ flows through the second electromagnet coil (108), and then flows into the first radial support winding (113). Therefore, when the amplitude and phase of the motor drive current ($i_{um}$, $i_{vm}$, $i_{wm}$) are $I_m$ and $\beta$, respectively, and the amplitude and phase of the radial support current ($i_{ur}$, $i_{vr}$, $i_{wr}$) are $I_r$ and $\varphi$, respectively, if the inverter (114, 116) is controlled such that

$$i_{um} = I_m \cdot \sin(\beta) + i_{zr}/3$$

$$i_{vm} = I_m \cdot \sin(\beta + 2\pi/3) + i_{zr}/3$$

$$i_{wm} = I_m \cdot \sin(\beta + 4\pi/3) + i_{zr}/3$$

$$i_{ur} = I_r \cdot \sin(\varphi) - i_{zr}/3$$

$$i_{vr} = I_r \cdot \sin(\varphi + 2\pi/3) - i_{zr}/3$$

$$i_{wr} = I_r \cdot \sin(\varphi + 4\pi/3) - i_{zr}/3,$$

the predetermined bias current $i_{zr}$ can be applied to the second electromagnet coil (108) of the second thrust magnetic bearing (107) without adding a switching element.

According to the present variation described above, the cost of the inverter can be reduced in the magnetic bearing system (100) of a type other than the back-to-back type without providing a diode as in the second embodiment illustrated in FIG. 9 and providing a magnet as in the first variation of the second embodiment illustrated in FIG. 10. Specifically, as compared to a conventional inverter for a thrust magnetic bearing, two switching elements can be reduced as illustrated in FIG. 12.

In addition, according to the present variation, the electromagnetic force in the axial direction, which is generated on the rotary shaft (101) by energizing the first electromagnet coil (106) of the first thrust magnetic bearing (105), and the electromagnetic force in the axial direction, which is generated on the rotary shaft (101) by energizing the second electromagnet coil (108) of the second thrust magnetic bearing (107), are in opposite directions, and the control band of the second electromagnet coil (108) to which the bias current is supplied is configured to be lower than the control band of the first electromagnet coil (106). Here, since the second electromagnet coil (108) is connected between the first motor winding (115) and the first radial support winding (113) of the first bearingless motor (110), an inductance increases and the control band of the second electromagnet coil (108) becomes lower. Thus, the switching frequency of the second electromagnet coil (108) can be lowered, and a loss due to switching can be reduced.

In the example illustrated in FIG. 13, the direction and magnitude of the bias current $i_{zr}$ can be adjusted by controlling the voltages of the radial support winding (113) and the motor winding (115) by the inverter (114, 116). This enables not only the constant voltage control of the second electromagnet coil (108) but also the low-band voltage control of the second electromagnet coil (108) according to the load of the impeller (102, 103) or the like.

Moreover, in the present variation, power is supplied from the inverter (161) to the first electromagnet coil (106) of the first thrust magnetic bearing (105), and the second electromagnet coil (108) to which the bias current is supplied is connected between the neutral point of the first motor winding (115) of the first bearingless motor (110) and the neutral point of the first radial support winding (113) of the first bearingless motor (110). However, instead, power may be supplied from a dedicated inverter to the second electromagnet coil (108) to which the bias current is supplied, and the first electromagnet coil (106) for thrust control may be connected between the neutral point of the first motor winding (115) and the neutral point of the first radial support winding (113). In this case, the inverter for the bias current has a simpler configuration than that of a conventional inverter for a thrust magnetic bearing, and the cost can be reduced.

(Third Variation of Second Embodiment)

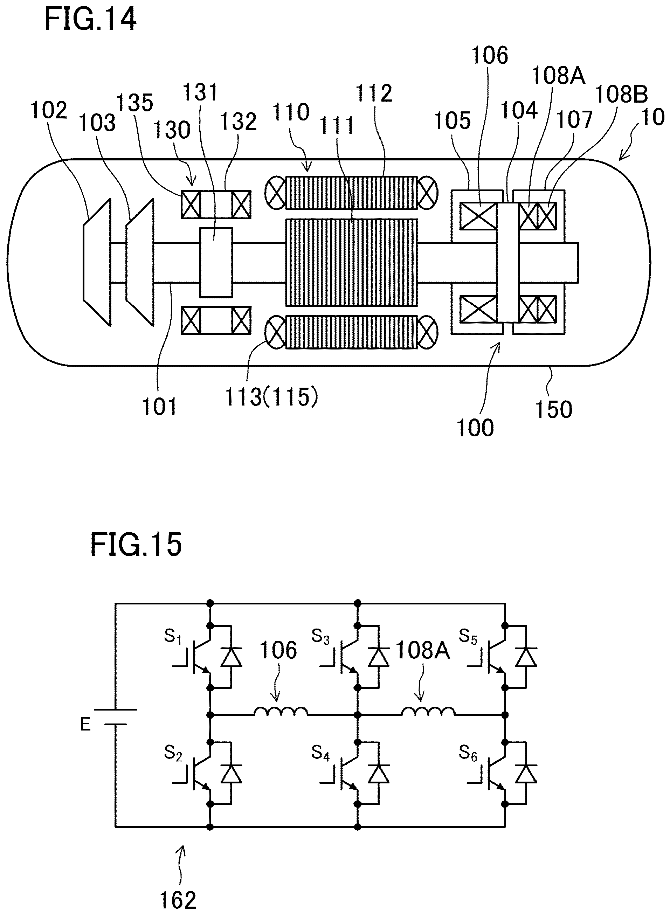

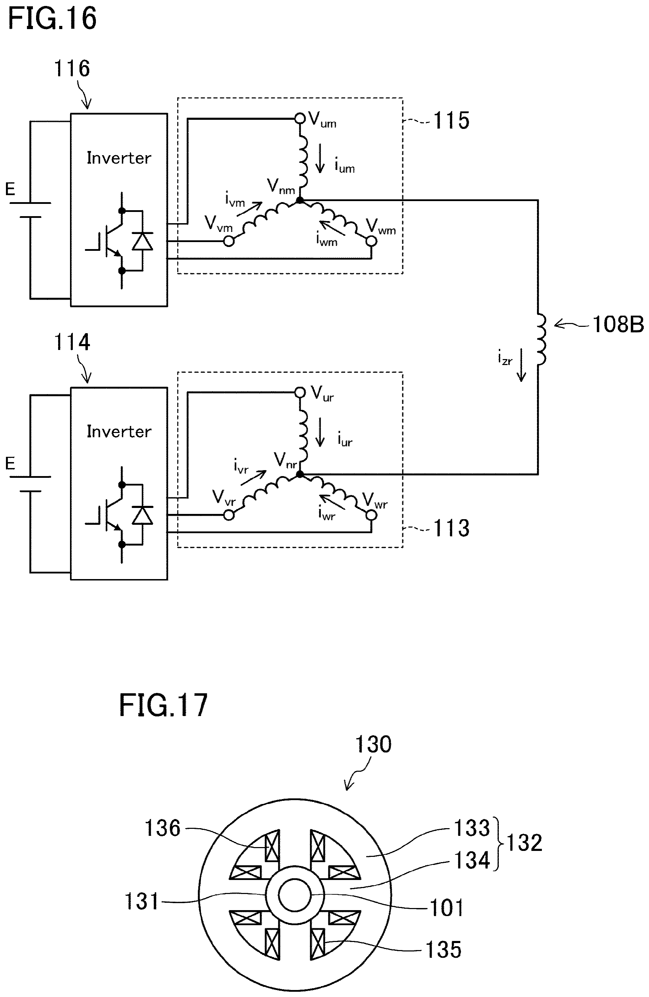

The magnetic bearing system (100) of the present variation is different from that of the second variation of the second embodiment in that as illustrated in FIG. 14, the second thrust magnetic bearing (107) is provided with a second electromagnet coil (108A) for the thrust control and a third electromagnet coil (108B) for biasing. Here, as illustrated in FIG. 15, power is supplied from a dedicated inverter (162) to the first electromagnet coil (106) of the first thrust magnetic bearing (105) and the second electromagnet coil (108A) of the second thrust magnetic bearing (107). On the other hand, as illustrated in FIG. 16, the third electromagnet coil (108B) of the second thrust magnetic bearing (107) is connected between the neutral point of the first motor winding (115) of the first bearingless motor (110) and the neutral point of the first radial support winding (113) of the first bearingless motor (110). In FIGS. 14 to 16, the same reference numerals are used to denote the same elements as those in the second embodiment illustrated in FIGS. 8 and 9 or those in the second variation of the second embodiment illustrated in FIGS. 12 and 13.

In the present variation, the position of the disk portion (104), i.e., the position of the drive shaft (101), is controlled by controlling the current flowing through the first electromagnet coil (106) and the second electromagnet coil (108A) using the inverter (162) while generating constant electromagnetic force in the axial direction on the rear side by the third electromagnet coil (108B). The control of the current flowing through the second electromagnet coil (108A) is for finely adjusting the electromagnetic force in the axial direction by the third electromagnet coil (108B).

In the present variation, when the predetermined bias current $i_{zr}$ is to be applied to the third electromagnet coil (108B) of the second thrust magnetic bearing (107), if $i_{zr}/3$ is superimposed on the winding of each phase of the first motor winding (115) in addition to the original motor drive current, the bias current $i_{zr}$ can be applied to the second electromagnet coil (108) as the zero phase current. The zero phase current $i_{zr}$ flows through the second electromagnet coil (108), and then flows into the first radial support winding (113). Therefore, when the amplitude and phase of the motor drive current ($i_{um}$, $i_{vm}$, $i_{wm}$) are $I_m$ and $\beta$, respectively, and the amplitude and phase of the radial support current ($i_{ur}$, $i_{vr}$, $i_{wr}$) are $I_r$ and $\varphi$, respectively, if the inverter (114, 116) is controlled such that

$$i_{um} = I_m \cdot \sin(\beta) + i_{zr}/3$$

$$i_{vm} = I_m \cdot \sin(\beta + 2\pi/3) + i_{zr}/3$$

$$i_{wm} = I_m \cdot \sin(\beta + 4\pi/3) + i_{zr}/3$$

$$i_{ur} = I_r \cdot \sin(\varphi) - i_{zr}/3$$

$$i_{vr} = I_r \cdot \sin(\varphi + 2\pi/3) - i_{zr}/3$$

$$i_{wr} = I_r \cdot \sin(\varphi + 4\pi/3) - i_{zr}/3,$$

the predetermined bias current $i_{zr}$ can be applied to the third electromagnet coil (108B) of the second thrust magnetic bearing (107) without adding a switching element.

According to the present variation described above, the cost of the inverter can be reduced in the magnetic bearing system (100) of a type other than the back-to-back type without providing a diode as in the second embodiment illustrated in FIG. 9 and providing a magnet as in the first variation of the second embodiment illustrated in FIG. 10. Specifically, by providing the third electromagnet coil (108B) for biasing in the second thrust magnetic bearing (106), the magnitude of the current flowing through the second electromagnet coil (108A) for the thrust control can be decreased. Thus, the current capacity of the inverter (162) can be reduced as compared to a conventional inverter for a thrust magnetic bearing, and the cost can be reduced.

In addition, according to the present variation, the electromagnetic force in the axial direction, which is generated on the rotary shaft (101) by energizing the second electromagnet coil (108A) of the second thrust magnetic bearing (107), and the electromagnetic force in the axial direction, which is generated on the rotary shaft (101) by energizing the third electromagnet coil (108B) of the same second thrust magnetic bearing (107), are in opposite directions, and the control band of the third electromagnet coil (108B) to which the bias current is supplied is configured to be lower than the control band of the second electromagnet coil (108A). Here, since the third electromagnet coil (108B) is connected between the first motor winding (115) and the first radial support winding (113) of the first bearingless motor (110), the inductance increases and the control band of the third electromagnet coil (108B) becomes lower. Thus, the switching frequency of the third electromagnet coil (108B) can be lowered, and the loss due to switching can be reduced.

In this variation, the direction of the current flowing through the second electromagnet coil (108A) for the thrust control may be adjustable by controlling the inverter (162) illustrated in FIG. 15.

In the example illustrated in FIG. 16, the direction and magnitude of the bias current $i_{zr}$ can be adjusted by controlling the voltages of the radial support winding (113) and the motor winding (115) by the inverter (114, 116). This enables not only the constant voltage control of the third electromagnet coil (108B) but also the low-band voltage control of the third electromagnet coil (108B) according to the load of the impeller (102, 103) or the like.

(Third Embodiment)

The magnetic bearing system (100) of the present embodiment is different from that of the second embodiment (see FIGS. 8 and 9) in that the electromagnet coil (135) of the radial magnetic bearing (130), rather than the electromagnet coil (106, 108) of the thrust magnetic bearing (105, 107), is connected between the neutral point of the first motor winding (115) of the first bearingless motor (110) and the neutral point of the first radial support winding (113) of the first bearingless motor (110). Accordingly, effects similar to those of the second embodiment can be obtained.

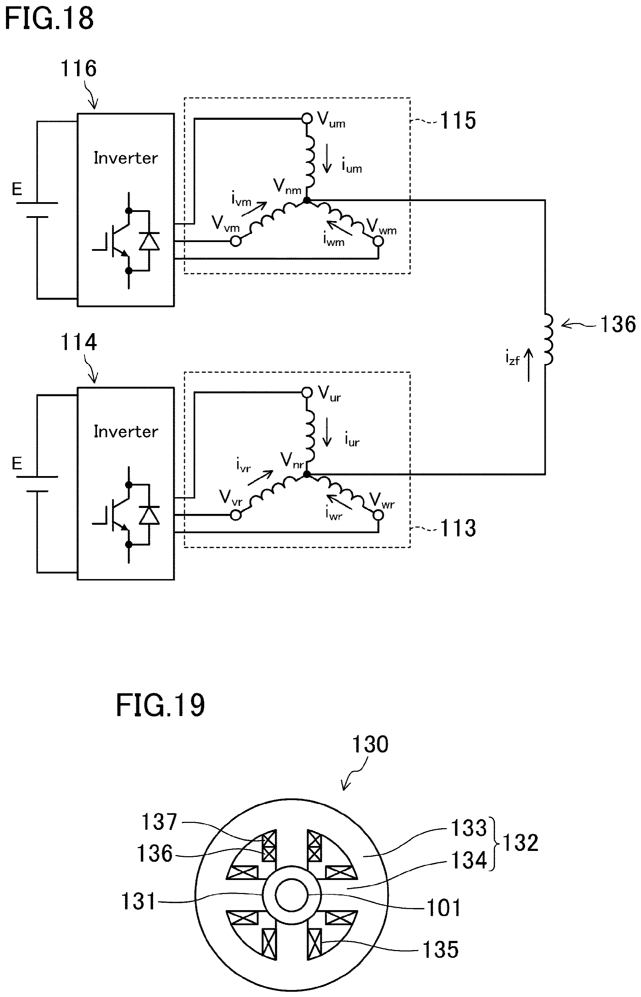

In the present embodiment, as illustrated in FIGS. 17 and 18, the radial magnetic bearing (130) may be provided with an electromagnet coil (136) for biasing separately from the electromagnet coil (135) for the radial control, and the electromagnet coil (136) may be connected between the neutral point of the first motor winding (115) of the first bearingless motor (110) and the neutral point of the first radial support winding (113) of the first bearingless motor (110). In this case, power is supplied from a dedicated inverter to the electromagnet coil (135) for the radial control.

Specifically, the radial magnetic bearing (130) includes the stator (132) having a back yoke portion (133) and a plurality of tooth portions (134), and the electromagnet coil (135) wound around each tooth portion (134). For example, the electromagnet coil (135) includes a pair of electromagnet coils (135) disposed with the rotary shaft (101) (enlarged diameter portion (102)) interposed therebetween in each of a first radial direction and a second radial direction perpendicular to the first radial direction. Here, one of the pair of electromagnet coils (135) is replaced with the bias electromagnet coil (136) for biasing, and the electromagnet coil (136) for biasing is connected between the neutral point of the first motor winding (115) and the neutral point of the first radial support winding (113). The electromagnetic force in the radial direction, which is generated by the electromagnet coil (136) for biasing, is constant, and the position of the enlarged diameter portion (102), i.e., the position of the drive shaft (101), is controlled by controlling the current flowing through the electromagnet coil (135) for the radial control. In FIG. 18, the same reference numerals are used to denote the same elements as those in the second embodiment illustrated in FIG. 9.

When the predetermined bias current $i_{zr}$ is to be applied to the electromagnet coil (136) for biasing, if $i_{zf}/3$ is superimposed on the winding of each phase of the first radial support winding (113) in addition to the original radial support current, the bias current $i_{zf}$ can be applied to the electromagnet coil (136) as the zero phase current. The zero phase current $i_{zf}$ flows through the electromagnet coil (136) for biasing, and then flows into the first motor winding (115). Therefore, when the amplitude and phase of the radial support current ($i_{ur}$, $i_{vr}$, $i_{wr}$) are $I_r$ and $\varphi$, respectively, and the amplitude and phase of the motor drive current ($i_{um}$, $i_{vm}$, $i_{wm}$) are $I_m$ and $\beta$, respectively, if the inverter (114, 116) is controlled such that

$$i_{ur} = I_r \cdot \sin(\varphi) + i_{zf}/3$$

$$i_{vr} = I_r \cdot \sin(\varphi + 2\pi/3) + i_{zf}/3$$

$$i_{wr} = I_r \cdot \sin(\varphi + 4\pi/3) + i_{zf}/3$$

$$i_{um} = I_m \cdot \sin(\beta) - i_{zf}/3$$

$$i_{vm} = I_m \cdot \sin(\beta + 2\pi/3) - i_{zf}/3$$

$$i_{wm} = I_m \cdot \sin(\beta + 4\pi/3) - i_{zf}/3,$$

the predetermined bias current $i_{zf}$ can be applied to the electromagnet coil (136) for biasing without adding a switching element.

According to the configuration illustrated in FIGS. 17 and 18 described above, effects similar to those of the second variation of the second embodiment can be obtained.

(Variation of Third Embodiment)

The magnetic bearing system (100) of the present variation is different from the third embodiment in that as illustrated in FIG. 19, one of the electromagnet coils (135) in pair disposed with the rotary shaft (101) (enlarged diameter portion (102)) interposed therebetween is replaced with the electromagnet coil (136) for biasing and the electromagnet coil (137) for the radial control. Here, the electromagnet coil (136) for biasing is connected between the neutral point of the first motor winding (115) of the first bearingless motor (110) and the neutral point of the first radial support winding (113) of the first bearingless motor (110), as in the third embodiment illustrated in FIG. 18. Moreover, power is supplied from a dedicated inverter to the electromagnet coil (135, 137) for the radial control.

According to the present variation, effects similar to those of the third variation of the second embodiment can be obtained.

(Fourth Embodiment)

In the magnetic bearing system (100) of each of the above-described first to third embodiments (including the variations, the same also applies hereinafter), when the zero phase current is applied to the first bearingless motor (110) and/or the second bearingless motor (120), the shaft support force is affected thereby, and the motor control may become difficult. Specifically, when the shaft support force is to be controlled in two axes (x-axis and y-axis), if the zero phase current is applied, pulsation occurs in the shaft support force Fx in the x-axis direction and the shaft support force Fy in the y-axis direction, and interference may occur between the shaft support force Fx and the shaft support force Fy.

Thus, in the present embodiment, the radial support winding (113, 123) of the bearingless motor (110, 120) is wound with a fractional pitch, and the winding pitch of the radial support winding (113, 123) is set to be equal to or greater than 1/2 of the number of slots of each pole of the radial support winding (113, 123). Thus, even when the zero phase current is applied to the radial support winding (113, 123), the influence of the zero phase current on the shaft support force of the radial support winding (113, 123) can be reduced, and therefore, the bearingless motor (110, 120) can be easily controlled.

The number of slots of each pole of the radial support winding (113, 123) of the bearingless motor (110, 120) is "the number of all slots/the number of poles of the support winding", and the number of slots of each pole and each phase of the radial support winding (113, 123) of the bearingless motor (110, 120) is "the number of slots of each pole/the number of phases of the radial support winding (113, 123)."

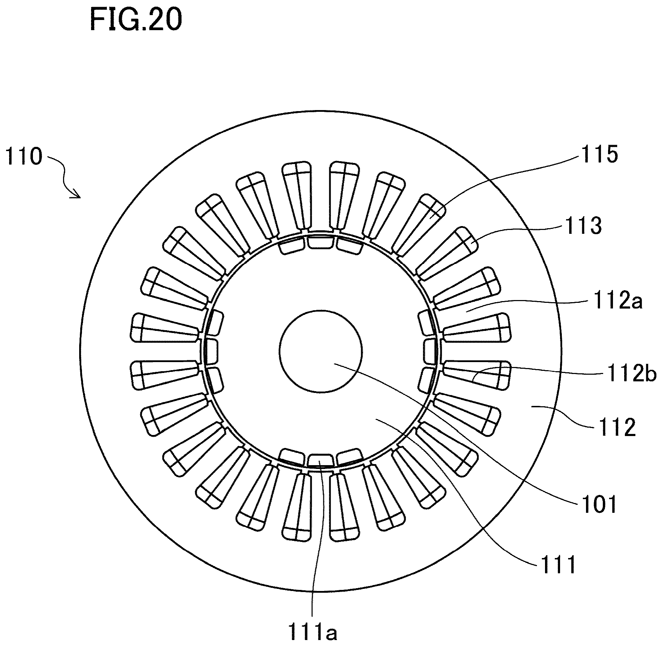

Hereinafter, a case where the first bearingless motor (110) is a CPM motor (consequent pole motor) will be specifically described as an example. FIG. 20 is a schematic view of a cross section perpendicular to the axial direction of a CPM motor having 8-pole motor winding, 2-pole support winding, and 24 slots. In FIG. 20, the same reference numerals are used to denote the same elements as those in the magnetic bearing system (100) illustrated in FIG. 1.

As illustrated in FIG. 20, the first bearingless motor (110) has the first rotor (111) and the first stator (112). The first rotor (111) is fixed to the drive shaft (101). A plurality of permanent magnets (111a) is embedded in the core portion of the first rotor (111). The first stator (112) has a plurality of (24 in this example) tooth portions (112a), and the first radial support winding (113) and the first motor winding (115) are disposed in slots (112b) which are spaces between the tooth portions (112a). In this example, each of the first radial support winding (113) and the first motor winding (115) is a three-phase winding having a U-phase, a V-phase, and a W-phase.

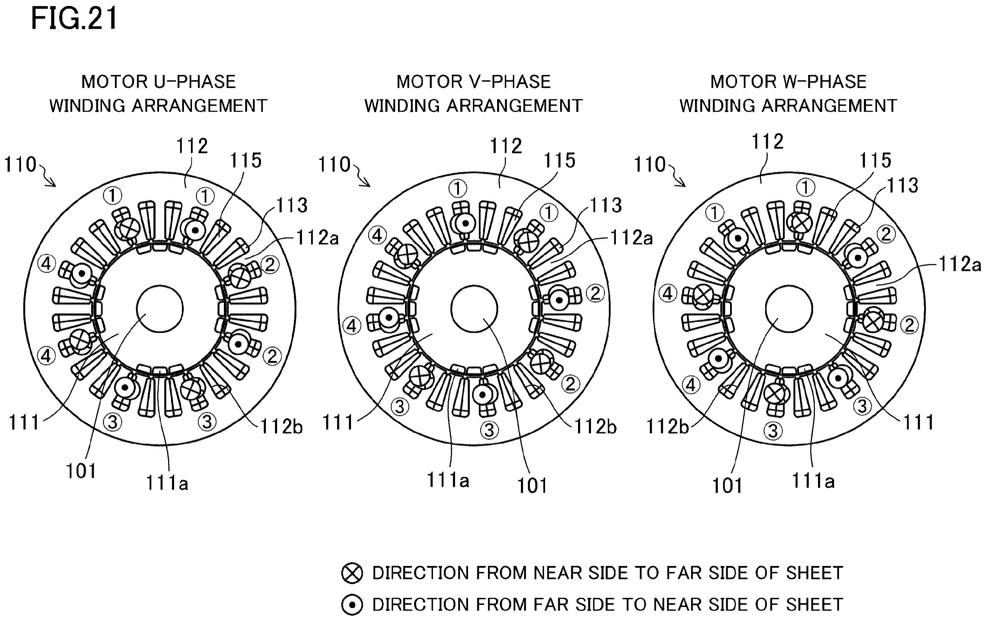

FIG. 21 illustrates the arrangement of the U-phase, V-phase, and W-phase motor windings in a case where the first motor winding (115) of the first bearingless motor (110) illustrated in FIG. 20 includes an eight-pole full-pitch distributed winding (two layers). Each motor winding is obtained by bundling four conductive wires having a wire diameter of 0.75 mm (four parallel windings) and winding the bundled conductive wires by eight turns. In FIG. 21, the motor winding of each phase is indicated by a circle mark (a cross mark in a circle mark indicates that the direction of the current is from the near side to the far side of the sheet, and a black dot in a circle mark indicates that the direction of the current is from the far side to the near side of the sheet), and the corresponding windings are denoted by the same reference numeral.

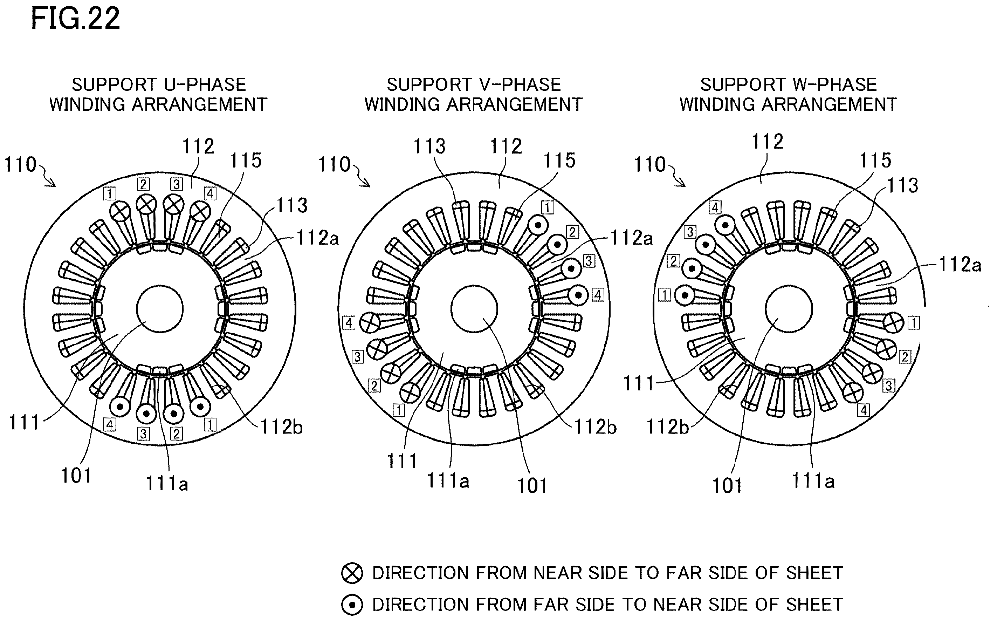

FIG. 22 illustrates the arrangement of the U-phase, V-phase, and W-phase support windings in a case where the first radial support winding (113) of the first bearingless motor (110) illustrated in FIG. 20 includes a two-pole full-pitch (12-pitch) distributed winding. In FIG. 22, the support winding of each phase is indicated by a circle mark (a cross mark in a circle mark indicates that the direction of the current is from the near side to the far side of the sheet, and a black dot indicates that the direction of the current is from the far side to the near side of the sheet), and the corresponding windings are denoted by the same reference numeral. As illustrated in FIG. 22, in the support winding arrangement, 12 tooth portions (112a) are interposed between the corresponding windings, and the winding pitch is set to 12.

Hereinafter, the influence of the zero phase current on the shaft support force in the support winding arrangement of the full-pitch distributed winding in which the shaft support force per unit support current is the greatest will be described.

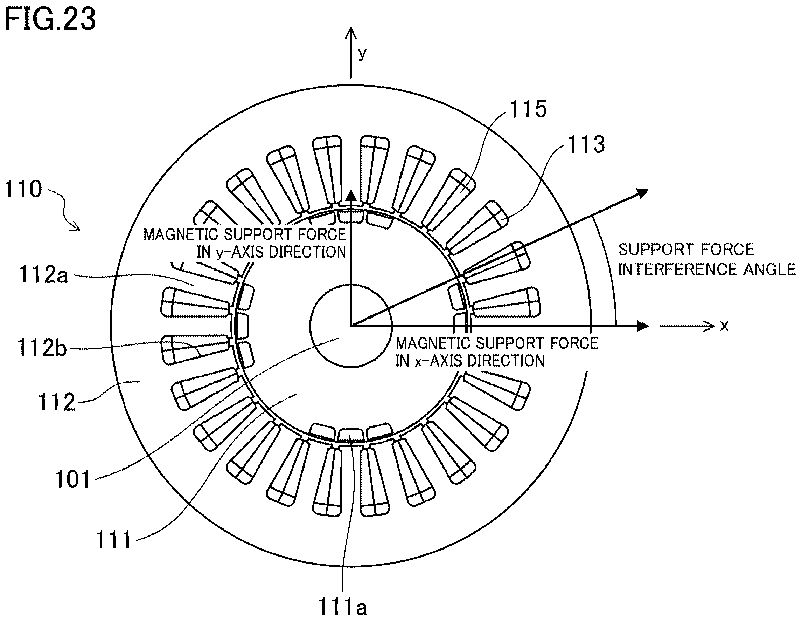

FIG. 23 illustrates a support force interference angle between magnetic support force in the x-axis direction and magnetic support force in the y-axis direction in the first bearingless motor (110) illustrated in FIGS. 20 to 22. Originally, it is preferable that no magnetic support force in the y-axis direction is generated when the magnetic support force in the x-axis direction is generated, but the degree of mutual interference when both the support forces are generated is represented by the support force interference angle illustrated in FIG. 23.

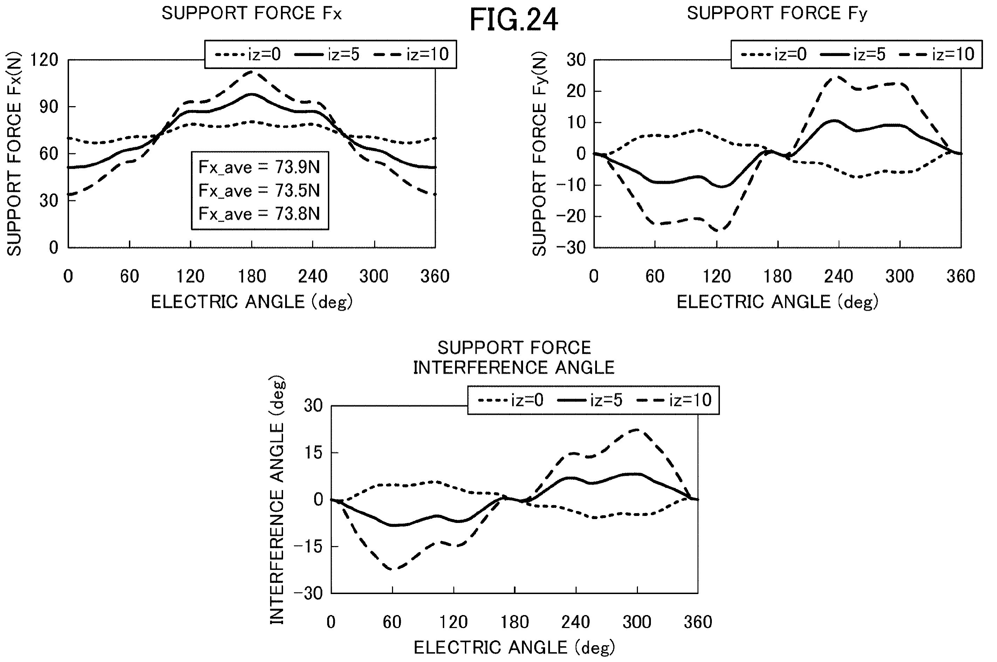

FIG. 24 illustrates the influence of the zero phase current iz (unit: A) on a relationship of an electrical angle with each of the support force Fx in the x-axis direction, the support force Fy in the y-axis direction, and the support force interference angle in the first bearingless motor (110) illustrated in FIG. 20. As illustrated in FIG. 24, even when the zero phase current iz is applied, the average value of the support force Fx does not change, but as the zero phase current iz increases, the pulsation of the support force Fy increases and the support force interference angle increases. The numerical values illustrated in FIG. 24 are values in a case where the CPM motor illustrated in FIG. 20 includes a stator core having an outer diameter of 130 mm, an inner diameter of 65 mm, and a lamination thickness of 25 mm, and a rotor core having an outer diameter of 63 mm and a lamination thickness of 25 mm, as an example. 35H360 was used as the material of the stator core and the rotor core, and N48 having a thickness of 3 mm was used as a magnet embedded in the rotor core.

Thus, in the present embodiment, in order to reduce the influence of the zero phase current on the shaft support force of the first radial support winding (113), the first radial support winding (113) is wound with a fractional pitch, and the winding pitch of the first radial support winding (113) is set to be equal to or greater than 1/2 of the number of slots of each pole of the radial support winding (113). Hereinafter, the configuration of the first bearingless motor (110) of the present embodiment will be specifically described based on the theoretical calculation expressions of the support forces Fx, Fy when the zero phase current is applied.

The support forces Fx, Fy are calculated by Expressions (1), (2) below.

[Mathematical Expression 1]

$$F_x = \frac{RL}{2\mu_0} \int_0^{2\pi} B_r^2 \cos\phi \, d\phi \quad \cdots (1)$$

[Mathematical Expression 2]

$$F_y = \frac{RL}{2\mu_0} \int_0^{2\pi} B_r^2 \sin\phi \, d\phi \quad \cdots (2)$$

In Expressions (1), (2), R is a radius from the center of the rotary shaft (101) to the center of an air gap (space between the rotor core and the stator core), L is the lamination thickness of the motor, $\varphi$ is a phase (fixed coordinates), $\mu_0$ is a magnetic permeability under vacuum, and Br is the magnetic flux density of the air gap in the radial direction.

The magnetic flux density Br is expressed by Expression (3) below as the product of a permeance P and a magnetomotive force F (magnetomotive force $F_{pm}$ of magnet, magnetomotive force $F_s$ of the support winding, and the magnetomotive force $F_m$ of the motor winding).

[Mathematical Expression 3]

$$B_r(\phi, t) = P(F_{pm} + F_s + F_m) \quad \cdots (3)$$

The permeance P is expressed by Expression (4) below.

[Mathematical Expression 4]

$$P = \frac{\mu_0}{g} \{P_0 - P_4 \cos(4\phi - \omega t)\} \quad \cdots (4)$$

In Expression (4), g is the length of the air gap in the radial direction, $P_0$ is a permeance component which does not change with space and phase, $P_4$ is a permeance component which changes with space and phase, $\omega$ is an electrical angle frequency, and t is time.

The magnetomotive force $F_{pm}$ of magnet is expressed by Expression (5) below with four pole pairs as a fundamental wave.

[Mathematical Expression 5]

$$F_{pm} = F_{pm4} \cos(4\phi - \omega t) \quad \cdots (5)$$

In Expression (5), $F_{pm4}$ is the amplitude of the magnetomotive force Fpm.

The magnetomotive force $F_s$ of the support winding is expressed by Expression (6) below as the product of a support winding distribution $N_s(\varphi)$ (U-phase distribution $N_{su}(\varphi)$, V-phase distribution $N_{sv}(\varphi)$, W-phase distribution $N_{sw}(\varphi)$) and the support current "is" (U-phase current isu, V-phase current isv, W-phase current isw).

[Mathematical Expression 6]

$$F_s = N_{su}(\phi)\, i_{su} + N_{sv}(\phi)\, i_{sv} + N_{sw}(\phi)\, i_{sw} \quad \cdots (6)$$

The support winding distribution $N_s(\varphi)$ is expressed by Expressions (7) to (9) below with one pole pair as a fundamental wave in consideration of three-fold and five-fold spatial harmonics.
[Mathematical Expression 7]

$$N_{su}(\phi) = N_s(N_{s1}\cos\phi + N_{s3}\cos3\phi + N_{s5}\cos5\phi) \quad \cdots (7)$$

[Mathematical Expression 8]

$$N_{sv}(\phi) = N_s(N_{s1}\cos(\phi - 2\pi/3) + N_{s3}\cos3(\phi - 2\pi/3) \\ + N_{s5}\cos5(\phi - 2\pi/3)) \quad \cdots (8)$$

[Mathematical Expression 9]

$$N_{sw}(\phi) = N_s(N_{s1}\cos(\phi - 4\pi/3) + N_{s3}\cos3(\phi - 4\pi/3) \\ + N_{s5}\cos5(\phi - 4\pi/3)) \quad \cdots (9)$$

In Expressions (7) to (9), $N_s$ is the number of turns of the support winding, and $N_{s1}$, $N_{s3}$, and $N_{s5}$ are the first-order, third-order, and fifth-order coefficients of the support winding, respectively.
Further, the support current "is" (U-phase current isu, V-phase current isv, W-phase current isw) is obtained by superimposing the zero phase current iz on the direct radial support current "Is," and is expressed as follows.

$$isu = -Is + iz/3$$

$$isv = Is/2 + iz/3$$

$$isw = Is/2 + iz/3.$$

The magnetomotive force $F_m$ of the motor winding is expressed by Expression (10) below as the product of a motor winding distribution $N_m(\varphi)$ (U-phase distribution $N_{mu}(\varphi)$, V-phase distribution $N_{mv}(\varphi)$, W-phase distribution $N_{mw}(\varphi)$) and the motor current "im" (U-phase current imu, V-phase current imv, W-phase current imw).
[Mathematical Expression 10]

$$F_m = N_{mu}(\phi)\, i_{mu} + N_{mv}(\phi)\, i_{mv} + N_{mw}(\phi)\, i_{mw} \quad \cdots (10)$$

The motor winding distribution $N_m(\varphi)$ is expressed by Expressions (11) to (13) below with four pole pairs as a fundamental wave in consideration of a three-fold spatial harmonic.
[Mathematical Expression 11]

$$N_{mu}(\phi) = N_m(N_{m4}\cos4\phi + N_{m12}\cos3\cdot4\phi) \quad \cdots (11)$$

[Mathematical Expression 12]

$$N_{mv}(\phi) = N_m(N_{m4}\cos4(\phi - 2\pi/3) \\ + N_{m12}\cos3\cdot4(\phi - 2\pi/3)) \quad \cdots (12)$$

[Mathematical Expression 13]

$$N_{mw}(\phi) = N_m \left( N_{m4} \cos 4(\phi - 4\pi/3) + N_{m12} \cos 3 \cdot 4(\phi - 4\pi/3) \right) \quad \cdots (13)$$

In Expressions (11) to (13), $N_m$ is the number of turns of the motor winding, and $N_{m4}$ and $N_{m12}$ are the first-order and third-order coefficients of the motor winding, respectively.

Further, the motor current "im" (U-phase current imu, V-phase current imv, W-phase current imw) is obtained by superimposing the zero phase current iz on the motor current "Im," and is expressed as follows.

$$imu = -Im \cdot \sin(\omega t) - iz/3$$

$$imv = -Im \cdot \sin(\omega t - 2\pi/3) - iz/3$$

$$imw = -Im \cdot \sin(\omega t - 4\pi/3) - iz/3.$$

By substituting the above expressions into Expressions (1), (2), the support forces $F_x$, $F_y$ are expressed by Expressions (14), (15) below, respectively.

[Mathematical Expression 14]

$$F_x = \frac{RLN_s\mu_0}{8\pi g^2} \pi F_{pm4} 24 N_{s1} I_s P_0 P_4$$

$$+ \frac{RLN_s\mu_0}{8\pi g^2} \pi F_{pm4}(-3 N_{s5} I_s + 2 N_{s3} i_z)(4 P_0^2 + 3 P_4^2) \cos \omega t$$

$$- \frac{RLN_s\mu_0}{8\pi g^2} N_m(-3 N_{s5} I_s + 2 N_{s3} i_z)\, 3 N_{m4} I_m(4 P_0^2 + P_4^2) \sin \omega t$$

$$- \frac{RLN_s\mu_0}{8\pi g^2} N_m(-3 N_{s5} I_s + 2 N_{s3} i_z)\, 2 N_{m12} i_z P_4^2 \cos 2 \omega t \quad \cdots (14)$$

[Mathematical Expression 15]

$$F_y = \frac{RLN_s\mu_0}{8\pi g^2} \pi F_{pm4}(3 N_{s5} I_s + 2 N_{s3} i_z)(4 P_0^2 + 3 P_4^2) \sin \omega t$$

$$+ \frac{RLN_s\mu_0}{8\pi g^2} N_m(3 N_{s5} I_s + 2 N_{s3} i_z)\, 3 N_{m4} I_m(4 P_0^2 + P_4^2) \cos \omega t$$

$$+ \frac{RLN_s\mu_0}{8\pi g^2} N_m(3 N_{s5} I_s + 2 N_{s3} i_z)\, 2 N_{m12} i_z P_4^2 \sin 2 \omega t \quad \cdots (15)$$

In Expression (14), the first term is the DC support force obtained by the support current, the second term includes the interference by the zero phase current ($N_{s3}i_z$) flowing through the support winding, the third term includes the interference by the zero phase current ($N_{s3}i_z$) flowing through the support winding and the fundamental wave current ($N_{m4}I_m$) flowing through the motor winding, and the fourth term includes the interference by the zero phase current ($N_{s3}i_z$) flowing through the support winding and the zero phase current ($N_{m12}i_z$) flowing through the motor winding. In the second and third terms of Expression (14), if the third-order winding coefficient $N_{s3}$ of the support winding is set to zero, the influence of the zero phase current can be excluded (interference can be eliminated). In the fourth term of Expression (14), even if the third-order winding coefficient $N_{s3}$ of the support winding is set to zero, the third-order winding coefficient $N_{m12}$ of the motor winding acts on $i_z$ and a pulsation (interference) of $\cos 2\omega t$ occurs, but the square of the permeance component (rotor permeance) $P_4$ is small, and therefore, the influence of the interferences is small, and it is also possible to eliminate the interference by setting the third-order winding coefficient $N_{m12}$ of the motor winding to zero.

In Expression (15), the first term includes the interference by the zero phase current ($N_{s3}i_z$) flowing through the support winding, the second term includes the interference by the zero phase current ($N_{s3}i_z$) flowing through the support winding and the fundamental wave current ($N_{m4}I_m$) flowing through the motor winding, and the third term includes the interference by the zero phase current ($N_{s3}i_z$) flowing through the support winding and the zero phase current ($N_{m12}i_z$) flowing through the motor winding. In the first and second terms of Expression (15), if the third-order winding coefficient $N_{s3}$ of the support winding is set to zero, the influence of the zero phase current can be excluded (interference can be eliminated). In the third term of Expression (15), even if the third-order winding coefficient $N_{s3}$ of the support winding is set to zero, the third-order winding coefficient $N_{m12}$ of the motor winding acts on $i_z$ and a pulsation (interference) of $\sin 2\omega t$ occurs, but the square of the permeance component (rotor permeance) $P_4$ is small, and therefore, the influence of the interferences is small, and it is also possible to eliminate the interference by setting the third-order winding coefficient $N_{m12}$ of the motor winding to zero.

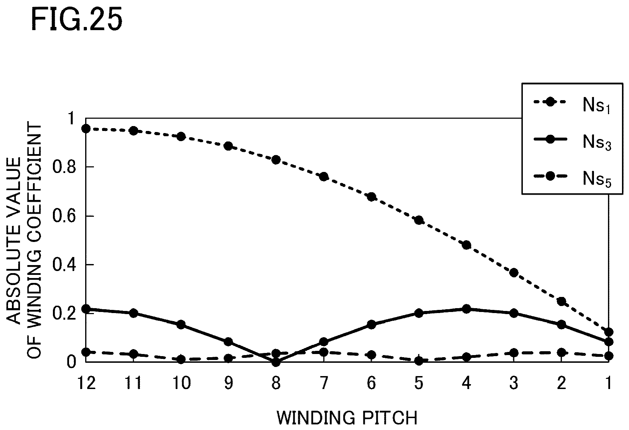

FIG. 25 shows a change in the absolute values of the first-order, third-order, and fifth-order support winding coefficients $N_{s1}$, $N_{s3}$, and $N_{s5}$ in a case where the winding pitch of the first radial support winding (113) is changed in the first bearingless motor (110) illustrated in FIG. 20. The support winding coefficient $N_{s(2n-1)}$ of each order is calculated by Expression (16) below.

[Mathematical Expression 16]

$$
\begin{aligned}
N_{s(2n-1)} &= N_{sh} \times N_{dis} \\
&= \frac{\sin\{p_n(2n-1)\frac{\theta_{cp}}{2}\}}{2n-1} \times \frac{\sin\{q\,p_n(2n-1)\frac{\alpha}{2}\}}{q\sin\{p_n(2n-1)\frac{\alpha}{2}\}} \\
&= \frac{\sin\{p_n(2n-1)\frac{N_p}{24}\pi\}}{2n-1} \times \frac{\sin\{4\,p_n(2n-1)\frac{\pi}{24}\}}{4\sin\{p_n(2n-1)\frac{\pi}{24}\}} \quad \cdots (16)
\end{aligned}
$$

In Expression (16), $N_{sh}$ is a fractional-pitch winding coefficient, $N_{dis}$ is a distributed winding coefficient, $p_n$ is the number of pole pairs, $q$ is the number of slots of each pole and each phase ($q = 4$ in this example), $\alpha$ is an angle per slot ($\alpha = 2\pi$/the number of slots, $\alpha = \pi/12$ in this example), $N_p$ is a winding pitch (the number of pitches), and $\theta_{cp}$ is a coil pitch angle ($\theta_{cp} = \alpha \times N_p$, $\theta_{cp} = \pi/12 \times N_p$ in this example).

As illustrated in FIG. 25, in a case where the first bearingless motor (110) is the CPM motor illustrated in FIG. 20, by setting the winding pitch of the first radial support winding (113) to 1/2 or more (i.e., six or more) of the number of slots of each pole of the radial support winding (113), for example, eight, the third-order winding coefficient $N_{s3}$ becomes zero, and the influence of the zero phase current can be excluded (interference can be eliminated) in the second and third terms of Expression (14) representing the support force Fx and the first and second terms of Expression (15) representing the support force Fy.

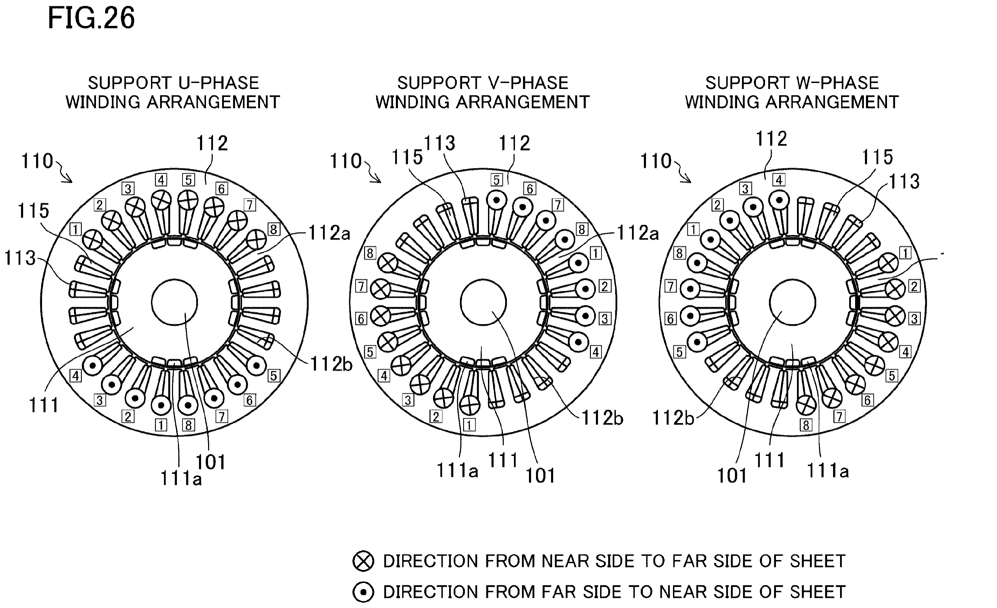

FIG. 26 illustrates the arrangement of the U-phase, V-phase, and W-phase support windings in a case where the first radial support winding (113) of the CPM motor illustrated in FIG. 20 includes a two-pole fractional-pitch eight-pitch distributed winding (two layers) as the first bearingless motor (110) of the present embodiment. In FIG. 26, the support winding of each phase is indicated by a circle mark (a cross mark in a circle mark indicates that the direction of the current is from the near side to the far side of the sheet, and a black dot indicates that the direction of the current is from the far side to the near side of the sheet), and the corresponding windings are denoted by the same reference numeral. As illustrated in FIG. 26, in the support winding arrangement, eight tooth portions (112a) are interposed between the corresponding windings, and the winding pitch is set to eight. Each support winding is obtained by winding a conductive wire having a wire diameter of 0.8 mm by eight turns.

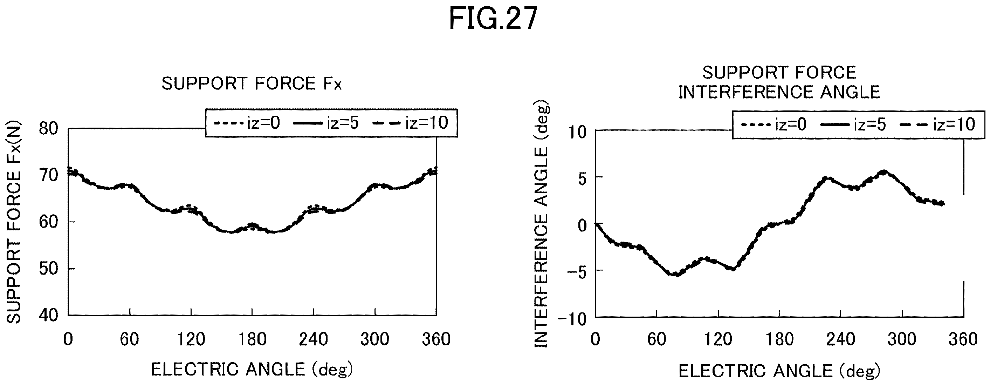

FIG. 27 illustrates the influence of the zero phase current iz (unit: A) on a relationship of the electrical angle with each of the support force Fx in the x-axis direction and the support force interference angle in the first bearingless motor (110) of the present embodiment configured as illustrated in FIG. 26. As illustrated in FIG. 27, even when the zero phase current iz is applied, no change is observed in the support force Fx and the support force interference angle. Thus, by setting the winding pitch of the first radial support winding (113) to eight, the influence of the zero phase current on the shaft support force of the first radial support winding (113) can be excluded (interference can be eliminated). The numerical values illustrated in FIG. 27 are values in a case where the CPM motor illustrated in FIG. 20 includes a stator core having an outer diameter of 130 mm, an inner diameter of 65 mm, and a lamination thickness of 25 mm, and a rotor core having an outer diameter of 63 mm and a lamination thickness of 25 mm, as an example. 35H360 was used as the material of the stator core and the rotor core, and N48 having a thickness of 3 mm was used as a magnet embedded in the rotor core.

In the above description, the winding pitch of the first radial support winding (113) is set such that the third-order winding coefficient $N_{s3}$ is zero, as an example. However, the present invention is not limited thereto, and the winding pitch of the first radial support winding (113) may be set to be about 2/3 (about eight in this example) of the number of slots of each pole of the radial support winding (113) based on the relationship between the support winding coefficient of each order and the winding pitch as illustrated in FIG. 25, thereby minimizing the third-order support winding coefficient $N_{s3}$. Alternatively, the winding pitch of the first radial support winding (113) may be set to be equal to or larger than about 2/3 (eight or more in this example) of the number of slots of each pole of the radial support winding (113), and a decrease in the first-order support winding coefficient $N_{s1}$ may be suppressed while the third-order support winding coefficient $N_{s3}$ is reduced. This can reduce the interference of the zero phase current while ensuring necessary shaft support force.

(Variation of Fourth Embodiment)

The present variation is different from the fourth embodiment in that a surface permanent magnet (SPM) motor is used as the first bearingless motor (110). In the SPM motor, a rotor core is cylindrical, and therefore, a permeance is only a DC value (average value) and there is no fluctuation component. The SPM motor is a four-pole motor, and support current is alternating current.

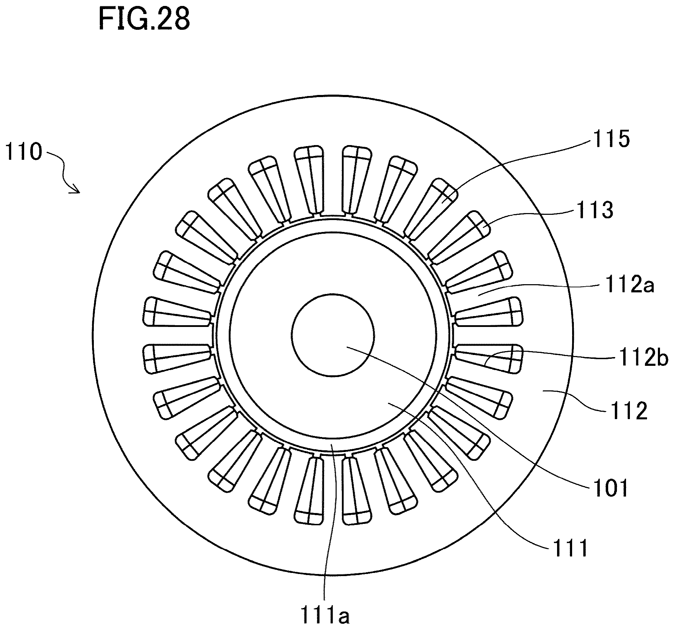

FIG. 28 is a schematic view of a cross section perpendicular to the axial direction of a SPM motor having 4-pole motor winding, 2-pole support winding, and 24 slots. In FIG. 28, the same reference numerals are used to denote the same components as those of the CPM motor illustrated in FIG. 20.

As illustrated in FIG. 28, the first bearingless motor (110) has the first rotor (111) and the first stator (112). The first rotor (111) is fixed to the drive shaft (101). The permanent magnets (111a) are annularly disposed at the outer periphery of the core portion of the first rotator (111). The first stator (112) has the plurality of (24 in this example) tooth portions (112a), and the first radial support winding (113) and the first motor winding (115) are disposed in the slots (112b) which are the spaces between the tooth portions (112a). In this example, each of the first radial support winding (113) and the first motor winding (115) is the three-phase winding having the U-phase, the V-phase, and the W-phase.

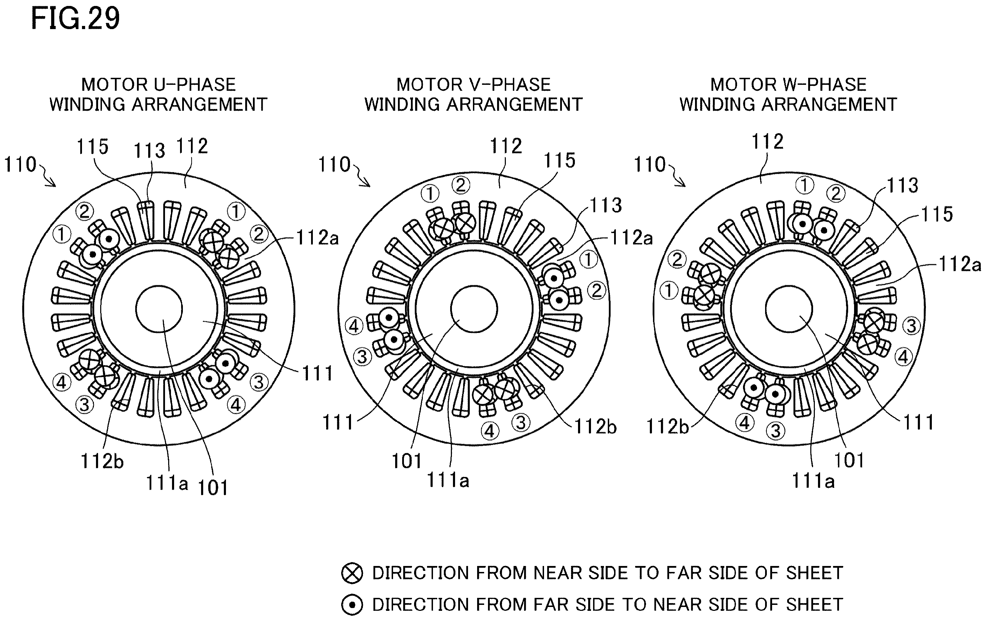

FIG. 29 illustrates the arrangement of the U-phase, V-phase, and W-phase motor windings in a case where the first motor winding (115) of the first bearingless motor (110) illustrated in FIG. 28 includes a four-pole full-pitch distributed winding (two layers). Each motor winding is obtained by bundling four conductive wires having a wire diameter of 0.75 mm (four parallel windings) and winding the bundled conductive wires by eight turns. In FIG. 29, the motor winding of each phase is indicated by a circle mark (a cross mark in a circle mark indicates that the direction of the current is from the near side to the far side of the sheet, and a black dot indicates that the direction of the current is from the far side to the near side of the sheet), and the corresponding windings are denoted by the same reference numeral.

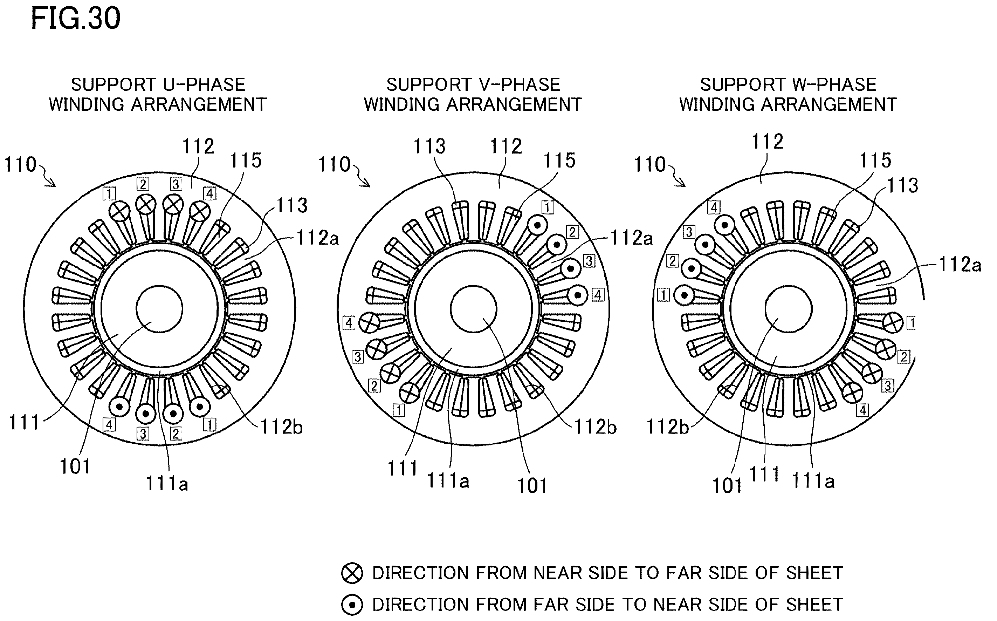

FIG. 30 illustrates the arrangement of the U-phase, V-phase, and W-phase support windings in a case where the first radial support winding (113) of the first bearingless motor (110) illustrated in FIG. 28 includes a two-pole full-pitch (12-pitch) distributed winding. In FIG. 30, the support winding of each phase is indicated by a circle mark (a cross mark in a circle mark indicates that the direction of the current is from the near side to the far side of the sheet, and a black dot indicates that the direction of the current is from the far side to the near side of the sheet), and the corresponding windings are denoted by the same reference numeral. As illustrated in FIG. 30, in the support winding arrangement, 12 tooth portions (112a) are interposed between the corresponding windings, and the winding pitch is set to 12.

Hereinafter, the influence of the zero phase current on the shaft support force in the support winding arrangement of the full-pitch distributed winding in which the shaft support force per unit support current is the greatest will be described.

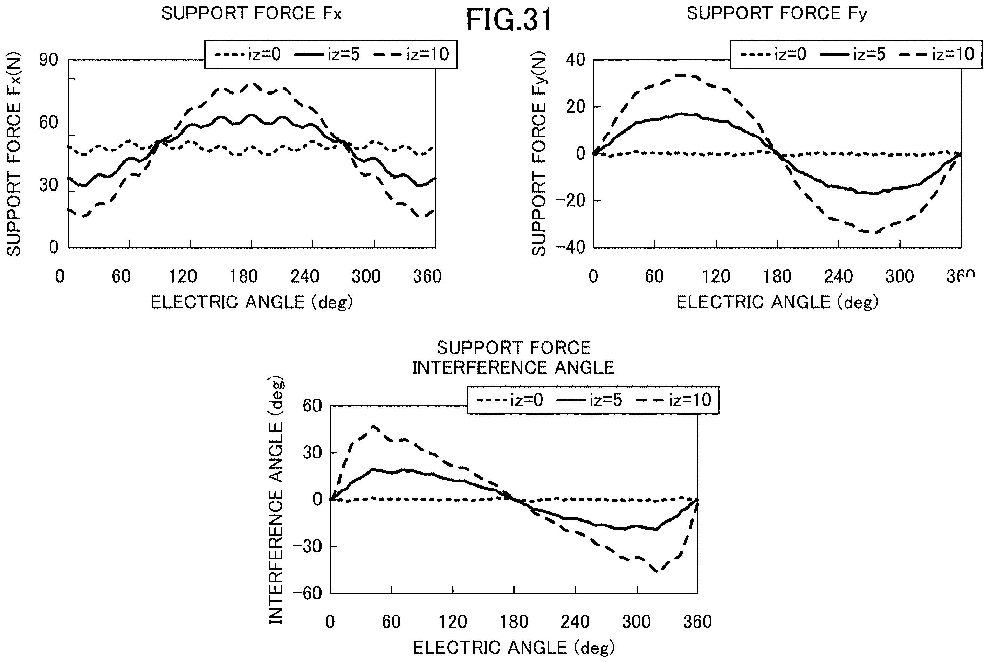

FIG. 31 illustrates the influence of the zero phase current iz (unit: A) on a relationship of an electrical angle with each of the support force Fx in the x-axis direction, the support force Fy in the y-axis direction, and the support force interference angle in the first bearingless motor (110) illustrated in FIGS. 28 to 30. As illustrated in FIG. 31, even when the zero phase current iz is applied, the average value of the support force Fx does not change, but as the zero phase current iz increases, the pulsation of the support force Fy increases and the support force interference angle increases. The numerical values illustrated in FIG. 31 are values in a case where the SPM motor illustrated in FIG. 28 includes a stator core having an outer diameter of 130 mm, an inner diameter of 65 mm, and a lamination thickness of 25 mm, and a rotor core having an outer diameter of 63 mm and a lamination thickness of 25 mm, as an example. 35H360 was used as the material of the stator core and the rotor core, and N48 having a thickness of 3 mm was used as a magnet embedded in the rotor core.

Thus, in the present variation, in order to reduce the influence of the zero phase current on the shaft support force of the first radial support winding (113), the first radial support winding (113) is wound with a fractional pitch, and the winding pitch of the first radial support winding (113) is set to be equal to or greater than 1/2 of the number of slots of each pole of the radial support winding (113). Hereinafter, the configuration of the first bearingless motor (110) of the present variation will be specifically described based on the theoretical calculation expressions of the support forces Fx, Fy when the zero phase current is applied.

The support forces Fx, Fy are calculated by Expressions (1), (2), as in the fourth embodiment. The magnetic flux density Br in Expressions (1), (2) is expressed by Expression (3) as the product of a permeance P and a magnetomotive force F (magnetomotive force $F_{pm}$ of magnet, magnetomotive force Fs of the support winding, and the magnetomotive force Fm of the motor winding), as in the fourth embodiment.

The permeance P is expressed by Expression (17) below.

[Mathematical Expression 17]

$$P = \frac{\mu_0}{g} P_0 \quad \cdots (17)$$

In Expression (17), $\mu_0$ is a magnetic permeability under vacuum, g is the length of the air gap in the radial direction, and $P_0$ is a permeance component which does not change with space and phase.

The magnetomotive force $F_{pm}$ of magnet is expressed by Expression (18) below with two pole pairs as a fundamental wave.

[Mathematical Expression 18]

$$F_{pm} = F_{pm2} \cos(2\phi - \omega t) \quad \cdots (18)$$

In Expression (18), $F_{pm2}$ is the amplitude of the magnetomotive force $F_{pm}$.

The magnetomotive force Fs of the support winding is expressed by Expression (6) as the product of the support winding distribution Ns(φ) (U-phase distribution Nsu(φ), V-phase distribution Nsv(φ), W-phase distribution Nsw(φ)) and the support current "is" (U-phase current isu, V-phase current isv, W-phase current isw), as in the fourth embodiment.

The support winding distribution Ns(φ) is expressed by Expressions (7) to (9) with one pole pair as the fundamental wave in consideration of the three-fold and five-fold spatial harmonics, as in the fourth embodiment.

Further, the support current "is" (U-phase current isu, V-phase current isv, W-phase current isw) is obtained by superimposing the zero phase current iz on the alternating radial support current "Is," and is expressed as follows.

$$isu = Is \cdot \cos(\omega t) + iz/3$$

$$isv = Is \cdot \cos(\omega t - 2\pi/3) + iz/3$$

$$isw = Is \cdot \cos(\omega t - 4\pi/3) + iz/3.$$

The magnetomotive force Fm of the motor winding is expressed by Expression (10) as the product of the motor winding distribution Nm(φ) (U-phase distribution Nmu(φ), V-phase distribution Nmv(φ), W-phase distribution Nmw(φ)) and the motor current "im" (U-phase current imu, V-phase current imv, W-phase current imw), as in the fourth embodiment.

The motor winding distribution Nm(φ) is expressed by Expressions (19) to (21) below with two pole pairs as a fundamental wave in consideration of a three-fold spatial harmonic.

[Mathematical Expression 19]

$$N_{mu}(\phi) = N_m (N_{m2} \cos 2\phi + N_{m6} \cos 3 \cdot 2\phi) \quad \cdots (19)$$

[Mathematical Expression 20]

$$N_{mv}(\phi) = N_m(N_{m2}\cos2(\phi-2\pi/3) \\ + N_{m6}\cos3 \cdot 2(\phi-2\pi/3)) \quad \cdots (20)$$

[Mathematical Expression 21]

$$N_{mw}(\phi) = N_m(N_{m2}\cos2(\phi-4\pi/3) \\ + N_{m6}\cos3 \cdot 2(\phi-4\pi/3)) \quad \cdots (21)$$

In Expressions (19) to (21), Nm is the number of turns of the motor winding, and $N_{s2}$ and $N_{s6}$ are the first-order and third-order coefficients of the motor winding, respectively.

Further, the motor current "im" (U-phase current imu, V-phase current imv, W-phase current imw) is obtained by superimposing the zero phase current iz on the motor current "Im," and is expressed as follows.

$$imu = -Im \cdot \sin(\omega\, t) - iz/3$$

$$imv = -Im \cdot \sin(\omega t - 2\pi/3) - iz/3$$

$$imw = -Im \cdot \sin(\omega t - 4\pi/3) - iz/3.$$

By substituting the above expressions into Expressions (1), (2), the support forces Fx, Fy are expressed by Expressions (22), (23) below, respectively.

[Mathematical Expression 22]

$$F_X = \frac{RLN_s\mu_0 P_0{}^2}{2\pi g^2}\pi F_{pm2}3N_{s1}I_s$$

$$+ \frac{RLN_s\mu_0 P_0{}^2}{2\pi g^2}\pi F_{pm2}2N_{s3}i_z\cos\omega t$$

$$- \frac{RLN_s\mu_0 P_0{}^2}{2\pi g^2}6N_m N_{s3}i_z N_{m2}I_m\sin\omega t$$

$$- \frac{RLN_s\mu_0 P_0{}^2}{2\pi g^2}6N_m N_{s5}I_s N_{m6}i_z\cos\omega t \quad \cdots (22)$$

[Mathematical Expression 23]

$$F_y = \frac{RLN_s\mu_0 P_0^2}{2\pi g^2} 9 N_m N_{m2} I_m N_{s1} I_s$$

$$- \frac{RLN_s\mu_0 P_0^2}{2\pi g^2} 2\pi F_{pm2} N_{s3} i_z \sin \omega t$$

$$- \frac{RLN_s\mu_0 P_0^2}{2\pi g^2} 6 N_m N_{m2} I_m N_{s3} i_z \cos \omega t$$

$$- \frac{RLN_s\mu_0 P_0^2}{2\pi g^2} 6 N_m N_{s5} I_s N_{m6} i_z \sin \omega t \quad \cdots (23)$$

In Expression (22), the first term is the DC support force obtained by the support current, the second term includes the interference by the zero phase current ($N_{s3}i_z$) flowing through the support winding, the third term includes the interference by the zero phase current ($N_{s3}i_z$) flowing through the support winding and the fundamental wave current ($N_{m2}I_m$) flowing through the motor winding, and the fourth term includes the interference by the fundamental wave current ($N_{s5}I_s$) flowing through the support winding and the zero phase current ($N_{m6}i_z$) flowing through the motor winding. In the second and third terms of Expression (22), if the third-order winding coefficient $N_{s3}$ of the support winding is set to zero, the influence of the zero phase current can be excluded (interference can be eliminated). In the fourth term of Expression (22), even if the third-order winding coefficient $N_{s3}$ of the support winding is set to zero, the third-order winding coefficient $N_{m6}$ of the motor winding acts on iz and a pulsation (interference) of cosωt occurs, but the product of the fifth-order winding coefficient $N_{s5}$ of the support winding and the third-order winding coefficient $N_{m6}$ of the motor winding is small, and therefore, the influence of the interferences is small, and it is also possible to eliminate the interference by setting the third-order winding coefficient $N_{m6}$ of the motor winding to zero.

In Expression (23), the first term indicates the influence of armature reaction, the second term includes the interference by the zero phase current ($N_{s3}i_z$) flowing through the support winding, the third term includes the interference by the zero phase current ($N_{s3}i_z$) flowing through the support winding and the fundamental wave current ($N_{m2}I_m$) flowing through the motor winding, and the fourth term includes the interference by the fundamental wave current ($N_{s5}I_s$) flowing through the support winding and the zero phase current ($N_{m6}i_z$) flowing through the motor winding. In the second and third terms of Expression (23), if the third-order winding coefficient $N_{s3}$ of the support winding is set to zero, the influence of the zero phase current can be excluded (interference can be eliminated). In the fourth term of Expression (23), even if the third-order winding coefficient $N_{s3}$ of the support winding is set to zero, the third-order winding coefficient $N_{m6}$ of the motor winding acts on iz and a pulsation (interference) of sinωt occurs, but the product of the fifth-order winding coefficient $N_{s5}$ of the support winding and the third-order winding coefficient $N_{m6}$ of the motor winding is small, and therefore, the influence of the interferences is small, and it is also possible to eliminate the interference by setting the third-order winding coefficient $N_{m6}$ of the motor winding to zero.

The change in the absolute values of the first-order, third-order, and fifth-order support winding coefficients $N_{s1}$, $N_{s3}$, $N_{s5}$ in a case where the winding pitch of the first radial support winding (113) is changed in the first bearingless motor (110) illustrated in FIG. 28 is illustrated in FIG. 25, as in the fourth embodiment. The support winding coefficient $N_{s(2n-1)}$ of each order is also calculated by Expression (16), as in the fourth embodiment.

Thus, in a case where the first bearingless motor (110) is the SPM motor illustrated in FIG. 28, by setting the winding pitch of the first radial support winding (113) to 1/2 or more (i.e., six or more) of the number of slots of each pole of the radial support winding (113), for example, eight as illustrated in FIG. 25, the third-order winding coefficient $N_{s3}$ becomes zero, and the influence of the zero phase current can be excluded (interference can be eliminated) in the second and third terms of Expression (22) representing the support force Fx and the second and third terms of Expression (23) representing the support force Fy.

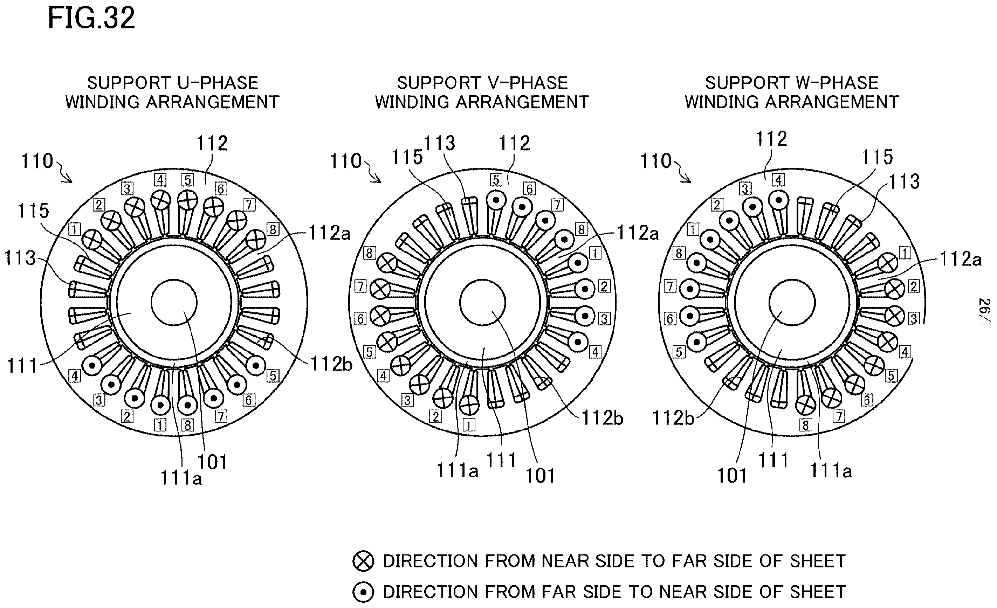

FIG. 32 illustrates the arrangement of the U-phase, V-phase, and W-phase support windings in a case where the first radial support winding (113) of the SPM motor illustrated in FIG. 28 includes a two-pole fractional-pitch eight-pitch distributed winding (two layers) as the first bearingless motor (110) of the present variation. In FIG. 32, the support winding of each phase is indicated by a circle mark (a cross mark in a circle mark indicates that the direction of the current is from the near side to the far side of the sheet, and a black dot indicates that the direction of the current is from the far side to the near side of the sheet), and the corresponding windings are denoted by the same reference numeral. As illustrated in FIG. 32, in the support winding arrangement, eight tooth portions (112a) are interposed between the corresponding windings, and the winding pitch is set to eight. Each support winding is obtained by winding a conductive wire having a wire diameter of 0.8 mm by eight turns.

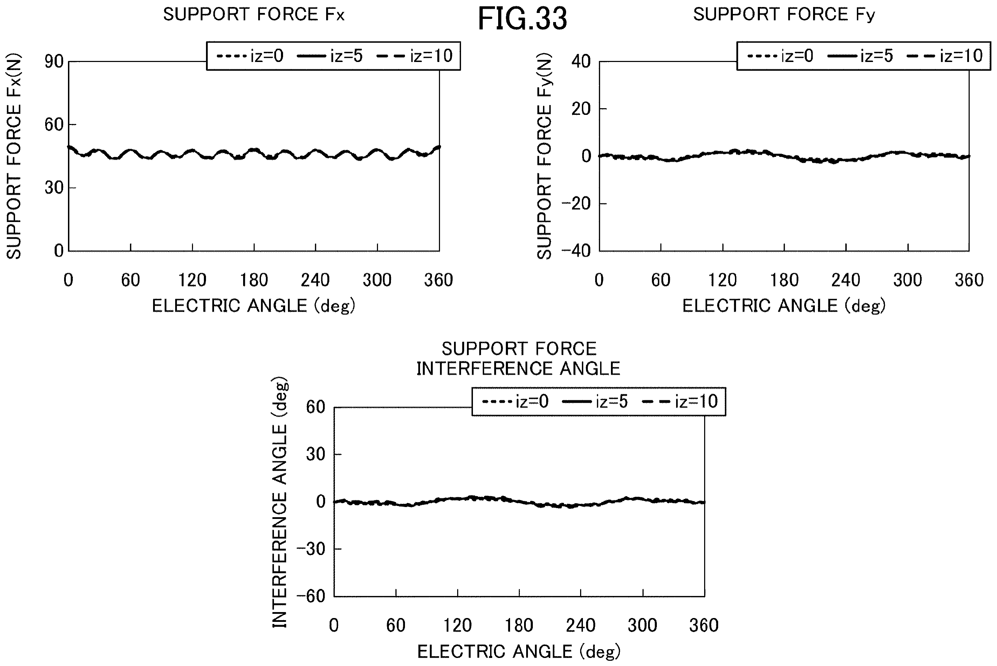

FIG. 33 illustrates the influence of the zero phase current iz (unit: A) on a relationship of an electrical angle with each of the support force Fx in the x-axis direction, the support force Fy in the y-axis direction, and the support force interference angle in the first bearingless motor (110) of the present variation configured as illustrated in FIG. 32. As illustrated in FIG. 33, even when the zero phase current iz is applied, no change is observed in the support forces Fx, Fy and the support force interference angle. Thus, by setting the winding pitch of the first radial support winding (113) to eight, the influence of the zero phase current on the shaft support force of the first radial support winding (113) can be excluded (interference can be eliminated). The numerical values illustrated in FIG. 33 are values in a case where the SPM motor illustrated in FIG. 28 includes a stator core having an outer diameter of 130 mm, an inner diameter of 65 mm, and a lamination thickness of 25 mm, and a rotor core having an outer diameter of 63 mm and a lamination thickness of 25 mm, as an example. 35H360 was used as the material of the stator core and the rotor core, and N48 having a thickness of 3 mm was used as a magnet embedded in the rotor core.

In the above description, the winding pitch of the first radial support winding (113) is set such that the third-order winding coefficient $N_{s3}$ is zero, as an example. However, the present invention is not limited thereto, and the winding pitch of the first radial support winding (113) may be set to be about 2/3 (about eight in this example) of the number of slots of each pole of the radial support winding (113) based on the relationship between the support winding coefficient of each order and the winding pitch as illustrated in FIG. 25, thereby minimizing the third-order support winding coefficient $N_{s3}$. Alternatively, the winding pitch of the first radial support winding (113) may be set to be equal to or larger than about 2/3 (eight or more in this example) of the number of slots of each pole of the radial support winding (113), and a decrease in the first-order support winding coefficient $N_{s1}$ may be suppressed while the third-order support winding coefficient $N_{s3}$ is reduced. This can reduce the interference of the zero phase current while ensuring necessary shaft support force.

(Fifth Embodiment)

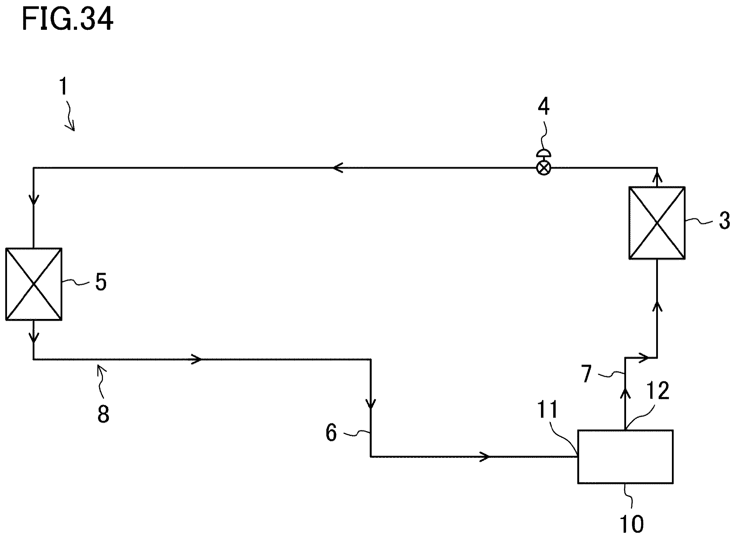

Hereinafter, an air conditioner (1) illustrated in FIG. 34 will be described as an example of a refrigeration apparatus including the compressor (10) provided with the magnetic bearing system (100) of the first to fourth embodiments (including the variations, the same also applies hereinafter).

The air conditioner (1) is an apparatus that conditions air in a target space through a vapor compression refrigeration cycle. The air conditioner (1) is capable of executing a cooling operation, and mainly includes the compressor (10), a heat-source-side heat exchanger (3), an expansion mechanism (4), and a utilization-side heat exchanger (5).

The compressor (10) sucks low-pressure refrigerant flowing through a suction pipe (6) via an inlet (11), compresses the refrigerant sucked via the inlet (11) into high-pressure refrigerant, and then discharges the high-pressure refrigerant to a discharge pipe (7) via an outlet (12). The suction pipe (6) is a refrigerant pipe through which the refrigerant flowing out of the utilization-side heat exchanger (5) is guided to the suction side (inlet (11)) of the compressor (10), and the discharge pipe (7) is a refrigerant pipe through which the refrigerant discharged from the compressor (10) via the outlet (12) is guided to the inlet of the heat-source-side heat exchanger (3).

As described in the first embodiment, for example, the compressor (10) mainly includes the drive shaft (101), the impellers (102, 103), and the bearingless motors (110, 120). The drive force of the bearingless motor (110, 120) is transmitted from the drive shaft (101) to the impeller (102, 103), and accordingly, the impeller (102, 103) rotates about the drive shaft (101). Accordingly, the compressor (10) compresses the sucked refrigerant flowing thereinto via the inlet (11).

The heat-source-side heat exchanger (3) functions as a refrigerant radiator that dissipates heat from the refrigerant discharged from the compressor (10) by exchanging heat between the refrigerant and water or air as a cooling source. One end of the heat-source-side heat exchanger (3) is connected to the outlet (12) of the compressor (10) via the discharge pipe (7). The other end of the heat-source-side heat exchanger (3) is connected to the expansion mechanism (4).

The expansion mechanism (4) is a mechanism for reducing the pressure of the refrigerant having dissipated heat in the heat-source-side heat exchanger (3), and includes, for example, an electric expansion valve. One end of the expansion mechanism (4) is connected to the heat-source-side heat exchanger (3). The other end of the expansion mechanism (4) is connected to the utilization-side heat exchanger (5).

The utilization-side heat exchanger (5) functions as a refrigerant heater that heats the refrigerant whose pressure has been reduced in the expansion mechanism (4) by exchanging heat between the refrigerant and water or air as a heating source. One end of the utilization-side heat exchanger (5) is connected to the expansion mechanism (4). The other end of the utilization-side heat exchanger (5) is connected to the inlet (11) of the compressor (10) via the suction pipe (6).

As can be seen from the above description, in the air conditioner (1), the compressor (10), the heat-source-side heat exchanger (3), the expansion mechanism (4), and the utilization-side heat exchanger (5) are sequentially connected together through the refrigerant pipes including the suction pipe (6) and the discharge pipe (7) to form a path (8) through which the refrigerant circulates.

According to the refrigeration apparatus (air conditioner (1)) of the present embodiment, since the compressor (10) driven by the magnetic bearing system (100) of the first to fourth embodiments is used, the cost of the inverter can be reduced, and the refrigeration apparatus can be manufactured at low cost.

(Other Embodiments)

Although the magnetic bearing system (100) is applied to the compressor (10) as an example in the above embodiments (including the variations, the same also applies hereinafter), the magnetic bearing system (100) is not limited to this use application and can be applied to a rotating electrical machine such as a motor or a generator, or various devices including the rotating electrical machine.

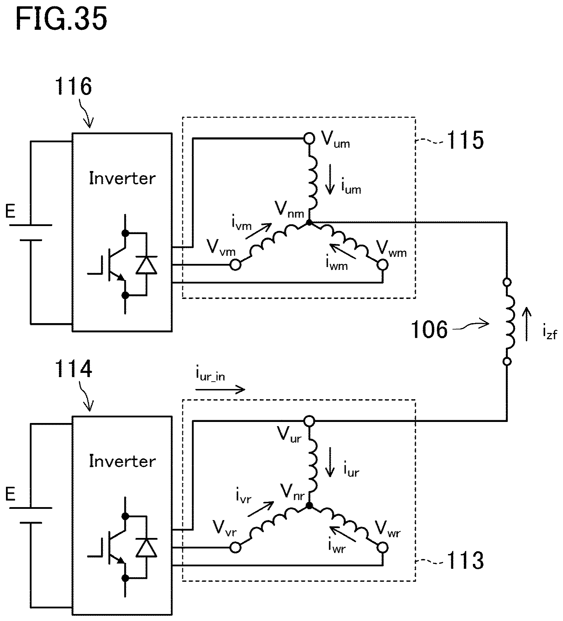

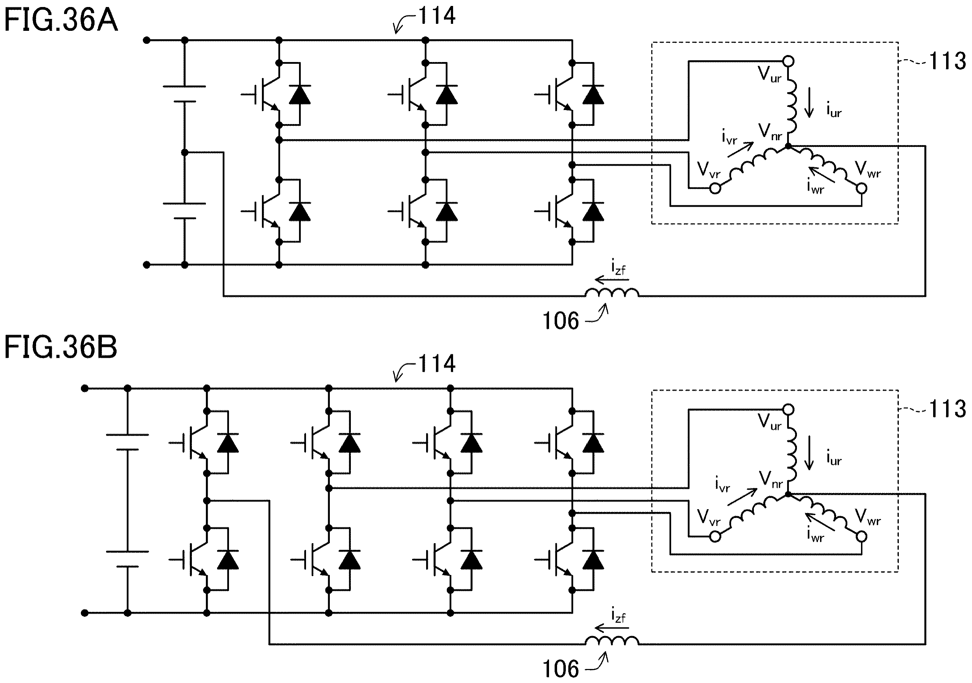

In the above embodiments, the electromagnet coil (106, 108, 108B) of the thrust magnetic bearing (105, 107) or the electromagnet coil (135, 136) of the radial magnetic bearing (130) is connected between the neutral points of the two multi-phase windings of the motor windings (115, 125) and the radial support windings (113, 123) of the bearingless motors (110, 120). However, the present invention is not limited thereto, and for example, as illustrated in FIG. 35, the electromagnet coil (106, 108, 108B, 135, 136) may be connected between the neutral point of one of the two multi-phase windings and an end portion of the other. Alternatively, as illustrated in FIGS. 36A and 36B, for example, the electromagnet coil (106, 108, 108B, 135, 136) may be connected between the neutral point of the multi-phase winding and a DC bus midpoint or a one-leg midpoint of the inverter that supplies power to such a multi-phase winding. In FIG. 35 and FIGS. 36A and 36B, the same reference numerals are used to denote the same elements as those in the first embodiment illustrated in FIGS. 2 and 3.

In the example illustrated in FIG. 35, the first electromagnet coil (106) of the first thrust magnetic bearing (105) is connected between an end portion (end portion of the U-phase winding in this example) of the first radial support winding (113) of the first bearingless motor (110) and the neutral point of the first motor winding (115) of the first radial support winding (113). Here, when the predetermined support current $i_{zf}$ is to be applied to the first electromagnet coil (106) of the first thrust magnetic bearing (105), a current $i_{ur\_in}$ obtained by superimposing $i_{zf}$ on the original motor drive current is applied from the first inverter (114) to the U-phase winding end portion of the first radial support winding (113). The current $i_{ur\_in}$ branches at the U-phase winding end portion, and the support current $i_{zf}$ flows through the first electromagnet coil (106). The support current $i_{zf}$ flows through the first electromagnet coil (106), and then flows into the first motor winding (115). Therefore, when the amplitude and phase of the radial support current ($i_{ur}$, $i_{vr}$, $i_{wr}$) of the first radial support winding (113) are $I_r$ and $\varphi$, respectively, and the amplitude and phase of the motor drive current ($i_{um}$, $i_{vm}$, $i_{wm}$) of the first motor winding (115) are $I_m$ and $\beta$, respectively, if the inverter (114, 116) is controlled such that

$$i_{ur\_in} = I_r \cdot \sin(\varphi) + i_{zr}$$

$$i_{ur} = I_r \cdot \sin(\varphi)$$

$$i_{vr} = I_r \cdot \sin(\varphi + 2\pi/3)$$

$$i_{wr} = I_r \cdot \sin(\varphi + 4\pi/3)$$

$$i_{um} = I_m \cdot \sin(\beta) - i_{zf}/3$$

$$i_{vm} = I_m \cdot \sin(\beta + 2\pi/3) - i_{zf}/3$$

$$i_{wm} = I_{m1} \cdot \sin(\beta + 4\pi/3) - i_{zf}/3,$$

the predetermined support current $i_{zf}$ can be applied to the first electromagnet coil (106) of the first thrust magnetic bearing (105) without adding a switching element.

In the example illustrated in FIG. 36A, the first electromagnet coil (106) of the first thrust magnetic bearing (105) is connected between the neutral point of the first radial support winding (113) of the first bearingless motor (110) and the DC bus neutral point of the first inverter (114). In the example illustrated in FIG. 36B, the first electromagnet coil (106) of the first thrust magnetic bearing (105) is connected between the neutral point of the first radial support winding (113) of the first bearingless motor (110) and the one-leg neutral point of the first inverter (114). Also in the configurations illustrated in FIGS. 36A and 36B, the predetermined support current $i_{zf}$ can be applied, using the zero phase current, to the first electromagnet coil (106) of the first thrust magnetic bearing (105) without adding a switching element.

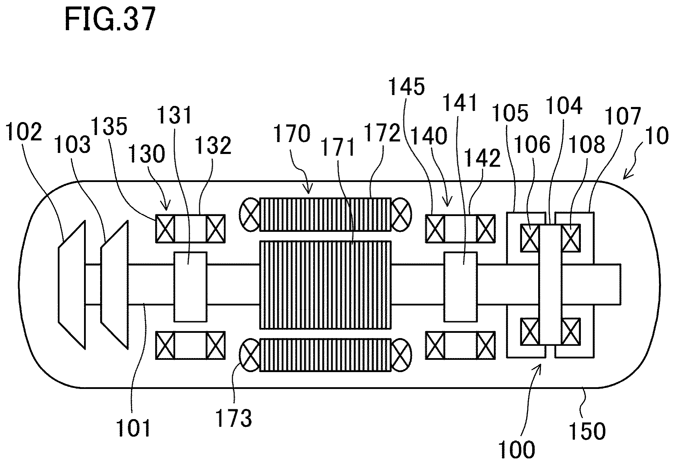

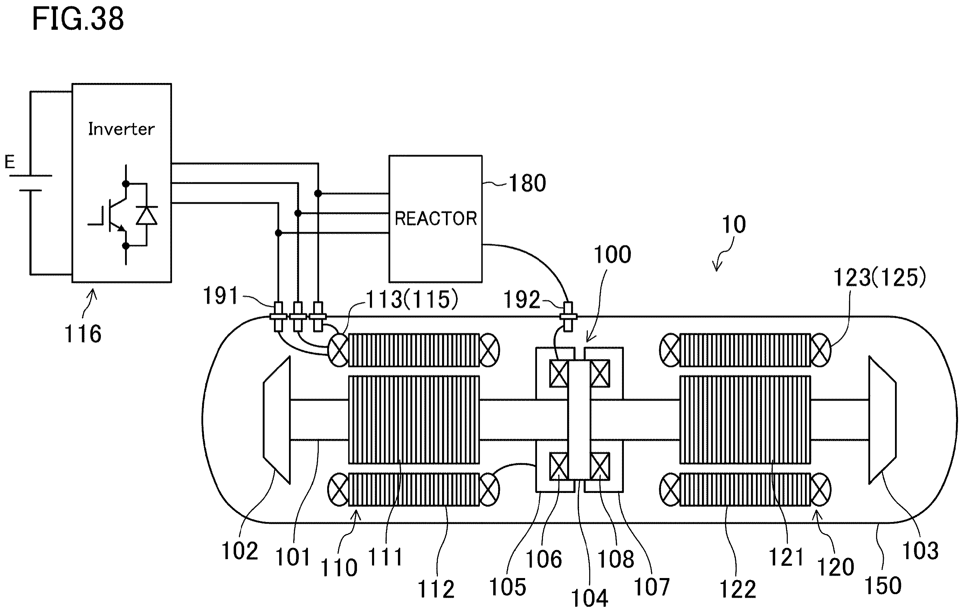

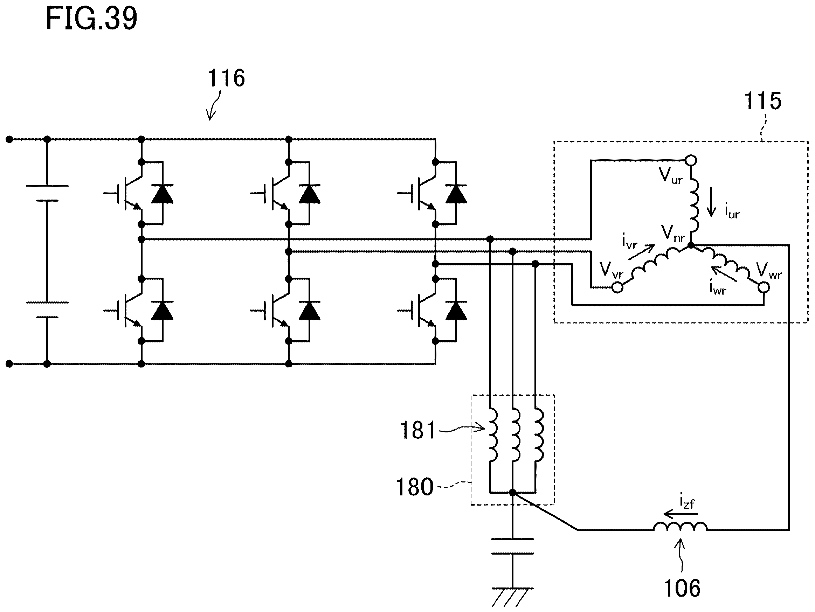

In the above embodiments, the multi-phase winding (113, 115, 123, 125) of the bearingless motor (110, 120) is used as the multi-phase winding for applying the support current to the electromagnet coil (106, 108, 108B) of the thrust magnetic bearing (105, 107) or the electromagnet coil (135, 136) of the radial magnetic bearing (130). However, the present invention is not limited thereto, and a magnetic bearing system (100) as illustrated in FIG. 37 may be configured, and a motor winding (173) of a normal motor (170) may be used instead of the multi-phase winding (113, 115, 123, 125) of the bearingless motor (110, 120). Alternatively, a magnetic bearing system (100) as illustrated in FIGS. 38 and 39 may be configured, and a reactor winding (181) of a reactor (180), which is an example of a static device, may be used. In FIGS. 37 to 39, the same reference numerals are used to denote the same elements as those in the first or second embodiment illustrated in FIGS. 1 to 3 and 8.

The magnetic bearing system (100) illustrated in FIG. 37 is different from the second embodiment illustrated in FIG. 8 in that the normal motor (170) is provided instead of the first bearingless motor (110) and another radial magnetic bearing (140) is provided between the motor (170) and the thrust magnetic bearing (105, 107). That is, in the magnetic bearing system (100) illustrated in FIG. 37, two radial magnetic bearings (130, 140) are disposed so as to sandwich the motor (170) in the axial direction. The another radial magnetic bearing (140) is configured to support the radial load on the drive shaft (101) in a non-contact manner, as in the radial magnetic bearing (130). The another radial magnetic bearing (140) is fixed to the inner peripheral wall of the pressure vessel (150). The diameter of a portion (141) of the rotary shaft (101) facing the another radial magnetic bearing (140) may be greater than the diameters of other portions. The another radial magnetic bearing (140) includes a stator (142) having a plurality of tooth portions (not illustrated), and an electromagnet coil (145) wound around each tooth portion. The motor (170) includes a rotor (171) and a stator (172). The rotor (171) is fixed to the drive shaft (101). The stator (172) is fixed to the inner peripheral wall of the pressure vessel (150). A plurality of permanent magnets (not illustrated) is embedded in a core portion of the rotor (171). The stator (172) has a plurality of tooth portions (not illustrated), and a motor winding (173) is wound around each tooth portion. The motor winding (173) generates rotation torque on the rotary shaft (101) by power supply. The motor winding (173) is a multi-phase winding having three or more phases (for example, three phase winding having a U-phase, a V-phase, and a W-phase).

The magnetic bearing system (100) illustrated in FIGS. 38 and 39 is different from the first embodiment illustrated in FIG. 1 mainly in that the reactor (180) having the reactor winding (181) is provided outside the pressure vessel (150). The reactor winding (181) is a multi-phase winding having three or more phases (three phase winding in this example). One end of the winding of each phase of the reactor winding (181) is connected at the neutral point. Predetermined voltage is applied from the second inverter (116) to the other end of the winding of each phase of the reactor winding (181), as in the first motor winding (115). One end of the first electromagnet coil (106) of the first thrust magnetic bearing (105) is connected to the neutral point of the reactor winding (181), and the other end of the first electromagnet coil (106) is connected to the neutral point of the first motor winding (115). The reactor (180) is provided outside the pressure vessel (150), as in the inverter (only the second inverter (116) is illustrated in this example). Thus, in order to apply voltage from the second inverter (116) to the first motor winding (115), an airtight terminal (191) is provided to electrically connect the inside and outside of the pressure vessel (150), and an airtight terminal (192) is provided to connect the first electromagnet coil (106) of the first thrust magnetic bearing (105) and the reactor winding (181).

A multi-phase winding of another type of static device (e.g., transformer) may be used instead of the reactor winding (181). Alternatively, the magnetic bearing system (100) illustrated in FIG. 37 may be provided with a reactor (180), and the first electromagnet coil (106) of the first thrust magnetic bearing (105) may be connected between the neutral point of the reactor winding (181) of the reactor (180) and the neutral point of the motor winding (173) of the normal motor (170).

While the embodiments have been described above, it will be understood that various changes in form and details can be made without departing from the spirit and scope of the claims. The above-described embodiments and variations may be appropriately combined or replaced.

INDUSTRIAL APPLICABILITY

As described above, the present disclosure is useful for a magnetic bearing system, a compressor, and a refrigeration apparatus.

DESCRIPTION OF REFERENCE CHARACTERS

| | |
|---|---|
| 1 | Air Conditioner (Refrigeration Apparatus) |
| 10 | Compressor |
| 100 | Magnetic Bearing System |
| 101 | Rotary Shaft |
| 105 | First Thrust Magnetic Bearing (Magnetic Bearing or Another Magnetic Bearing) |
| 106 | First Electromagnet Coil (Electromagnet Coil or Another Electromagnet Coil) |
| 107 | Second Thrust Magnetic Bearing (Magnetic Bearing or Another Magnetic Bearing) |
| 108 | Second Electromagnet Coil (Electromagnet Coil or Another Electromagnet Coil) |
| 108A | Second Electromagnet Coil (Another Electromagnet Coil) |
| 108B | Third Electromagnet Coil (Electromagnet Coil) |
| 110 | First Bearingless Motor (Bearingless Motor) |
| 113 | First Radial Support Winding (First or Second Multi-Phase Winding) |
| 115 | First Motor Winding (First or Second Multi-Phase Winding) |
| 120 | Second Bearingless Motor (Bearingless Motor) |
| 123 | Second Radial Support Winding (First or Second Multi-Phase Winding) |
| 125 | Second Motor Winding (First or Second Multi-Phase Winding) |
| 130 | Radial Magnetic Bearing (Magnetic Bearing) |
| 135 | Electromagnet Coil (Another Electromagnet Coil) |
| 136 | Electromagnet Coil |
| 137 | Electromagnet Coil (Another Electromagnet Coil) |
| 150 | Pressure Vessel |
| 173 | Motor Winding (First or Second Multi-Phase Winding) |
| 181 | Reactor Winding (First or Second Multi-Phase Winding) |

**Claims**

1. A magnetic bearing system (100) comprising:

   a rotary shaft (101); and
   a magnetic bearing (105, 107, 130) having an electromagnet coil (106, 108, 108B, 135, 136),
   one end of the electromagnet coil (106, 108, 108B, 135, 136) being connected to a neutral point of a first multi-phase winding (113, 115, 123, 125, 173, 181) having at least three or more phases.

2. The magnetic bearing system (100) of claim 1, wherein
   the other end of the electromagnet coil (106, 108, 108B, 135, 136) is connected to a neutral point or an end portion of a second multi-phase winding (113, 115, 123, 125, 173, 181) having at least three phases, which is different from the first multi-phase winding (113, 115, 123, 125, 173, 181).

3. The magnetic bearing system (100) of claim 2, further comprising:

   a bearingless motor (110, 120) including a motor winding (115, 125) that generates rotation torque on the rotary shaft (101) by power supply and a radial support winding (113, 123) that generates shaft support force for supporting the rotary shaft (101) in a non-contact manner by power supply, wherein
   the first multi-phase winding (113, 115, 123, 125, 173, 181) is one of the motor winding (115, 125) or the radial support winding (113, 123), and
   the second multi-phase winding (113, 115, 123, 125, 173, 181) is the other one of the motor winding (115, 125) or the radial support winding (113, 123).

4. The magnetic bearing system (100) of claim 3, wherein

   the radial support winding (113, 123) is wound with a fractional pitch, and
   a winding pitch of the radial support winding (113, 123) is equal to or greater than 1/2 of the number of slots of each pole of the radial support winding (113, 123).

5. The magnetic bearing system (100) of claim 2, further comprising:

a first bearingless motor (110) including a first motor winding (115) that generates rotation torque on the rotary shaft (101) by power supply and a first radial support winding (113) that generates shaft support force for supporting the rotary shaft (101) in a non-contact manner by power supply; and
a second bearingless motor (120) including a second motor winding (125) that generates rotation torque on the rotary shaft (101) by power supply and a second radial support winding (123) that generates shaft support force for supporting the rotary shaft (101) in a non-contact manner by power supply, wherein
the first multi-phase winding (113, 115, 123, 125, 173, 181) is one of the first motor winding (115) or the first radial support winding (113), and
the second multi-phase winding (113, 115, 123, 125, 173, 181) is one of the second motor winding (125) or the second radial support winding (123).

6. The magnetic bearing system (100) of claim 5, wherein

at least one radial support winding (113, 123) of the first radial support winding (113) or the second radial support winding (123) is wound with a fractional pitch, and
a winding pitch of the radial support winding (113, 123) is equal to or greater than 1/2 of the number of slots of each pole of the radial support winding (113, 123).

7. The magnetic bearing system (100) of any one of claims 1 to 6, wherein

the electromagnet coil (106, 108, 108B, 135, 136) and the first multi-phase winding (113, 115, 123, 125, 173) are disposed in an identical pressure vessel (150), and
the one end of the electromagnet coil (106, 108, 108B, 135, 136) is connected to the neutral point of the first multi-phase winding (113, 115, 123, 125, 173) in the pressure vessel (150).

8. The magnetic bearing system (100) of any one of claims 1 to 7, further comprising:

another electromagnet coil (106, 108, 108A, 135, 137) that generates, on the rotary shaft (101), electromagnetic force in a direction identical to or opposite to electromagnetic force generated on the rotary shaft (101) by energizing the electromagnet coil (106, 108, 108B, 136), wherein
a control band of the electromagnet coil (106, 108, 108B, 136) is lower than a control band of the another electromagnet coil (106, 108, 108A, 135, 137).

9. The magnetic bearing system (100) of claim 8, further comprising:

another magnetic bearing (105, 107) having the other magnetic bearing (106, 108), wherein
bias current is supplied to the electromagnet coil (106, 108), and
a direction of electromagnetic force generated on the rotary shaft (101) by energizing the electromagnet coil (106, 108) and a direction of electromagnetic force generated on the rotary shaft (101) by energizing the another magnetic bearing (106, 108) are opposite to each other.

10. The magnetic bearing system (100) of claim 8, wherein

the other electromagnet coil (108A, 137) is provided in the magnetic bearing (107, 130),
bias current is supplied to the electromagnet coil (108B, 136), and
a direction of electromagnetic force generated on the rotary shaft (101) by energizing the electromagnet coil (108B, 136) and a direction of electromagnetic force generated on the rotary shaft (101) by energizing the another electromagnet coil (108A, 137) are identical to each other.

11. The magnetic bearing system (100) of any one of claims 1 to 10, wherein
the magnetic bearing (105, 107, 130) is a thrust magnetic bearing or a radial magnetic bearing.

12. A compressor comprising: the magnetic bearing system (100) of any one of claims 1 to 11.

13. A refrigeration apparatus comprising: the compressor (10) of claim 12.

FIG.1

EP 4 647 625 A1

# FIG.2

# FIG.3

FIG.4

EP 4 647 625 A1

FIG.5

EP 4 647 625 A1

FIG.6

# FIG.7

## FIG.8

## FIG.9

FIG.10

FIG.11

## FIG.12

## FIG.13

FIG.14

FIG.15

# FIG.16

# FIG.17

## FIG.18

## FIG.19

FIG.20

# FIG.21

| MOTOR U-PHASE WINDING ARRANGEMENT | MOTOR V-PHASE WINDING ARRANGEMENT | MOTOR W-PHASE WINDING ARRANGEMENT |

⊗ DIRECTION FROM NEAR SIDE TO FAR SIDE OF SHEET

⊙ DIRECTION FROM FAR SIDE TO NEAR SIDE OF SHEET

EP 4 647 625 A1

# FIG.22

SUPPORT U-PHASE
WINDING ARRANGEMENT

SUPPORT V-PHASE
WINDING ARRANGEMENT

SUPPORT W-PHASE
WINDING ARRANGEMENT

⊗ DIRECTION FROM NEAR SIDE TO FAR SIDE OF SHEET

⊙ DIRECTION FROM FAR SIDE TO NEAR SIDE OF SHEET

EP 4 647 625 A1

FIG.23

110

115

113

MAGNETIC SUPPORT FORCE
IN y-AXIS DIRECTION

SUPPORT FORCE
INTERFERENCE ANGLE

112a

112b

MAGNETIC SUPPORT FORCE
IN x-AXIS DIRECTION

112

101

111

111a

EP 4 647 625 A1

# FIG.24

### SUPPORT FORCE Fx

SUPPORT FORCE Fx(N)

····iz=0 ——iz=5 ——iz=10

Fx_ave = 73.9N
Fx_ave = 73.5N
Fx_ave = 73.8N

ELECTRIC ANGLE (deg)

### SUPPORT FORCE Fy

SUPPORT FORCE Fy(N)

····iz=0 ——iz=5 ——iz=10

ELECTRIC ANGLE (deg)

### SUPPORT FORCE INTERFERENCE ANGLE

INTERFERENCE ANGLE (deg)

····iz=0 ——iz=5 ——iz=10

ELECTRIC ANGLE (deg)

EP 4 647 625 A1

# FIG.25

# FIG.26

SUPPORT U-PHASE
WINDING ARRANGEMENT

SUPPORT V-PHASE
WINDING ARRANGEMENT

SUPPORT W-PHASE
WINDING ARRANGEMENT

⊗ DIRECTION FROM NEAR SIDE TO FAR SIDE OF SHEET

⊙ DIRECTION FROM FAR SIDE TO NEAR SIDE OF SHEET

EP 4 647 625 A1

# FIG.27

SUPPORT FORCE Fx

SUPPORT FORCE
INTERFERENCE ANGLE

EP 4 647 625 A1

FIG.28

# FIG.29

MOTOR U-PHASE WINDING ARRANGEMENT

MOTOR V-PHASE WINDING ARRANGEMENT

MOTOR W-PHASE WINDING ARRANGEMENT

$\otimes$ DIRECTION FROM NEAR SIDE TO FAR SIDE OF SHEET

$\odot$ DIRECTION FROM FAR SIDE TO NEAR SIDE OF SHEET

EP 4 647 625 A1

# FIG.30

SUPPORT U-PHASE
WINDING ARRANGEMENT

SUPPORT V-PHASE
WINDING ARRANGEMENT

SUPPORT W-PHASE
WINDING ARRANGEMENT

⊗ DIRECTION FROM NEAR SIDE TO FAR SIDE OF SHEET

⊙ DIRECTION FROM FAR SIDE TO NEAR SIDE OF SHEET

EP 4 647 625 A1

FIG.31

SUPPORT FORCE Fx

SUPPORT FORCE Fy

SUPPORT FORCE
INTERFERENCE ANGLE

EP 4 647 625 A1

# FIG.32

SUPPORT U-PHASE
WINDING ARRANGEMENT

SUPPORT V-PHASE
WINDING ARRANGEMENT

SUPPORT W-PHASE
WINDING ARRANGEMENT

⊗ DIRECTION FROM NEAR SIDE TO FAR SIDE OF SHEET

⊙ DIRECTION FROM FAR SIDE TO NEAR SIDE OF SHEET

FIG.33

FIG.34

EP 4 647 625 A1

# FIG.35

FIG.36A

FIG.36B

FIG.37

# FIG.38

EP 4 647 625 A1

FIG.39

EP 4 647 625 A1

# INTERNATIONAL SEARCH REPORT

| International application No. |
|---|
| **PCT/JP2024/007233** |

**A. CLASSIFICATION OF SUBJECT MATTER**

*F16C 32/04*(2006.01)i; *H02K 7/09*(2006.01)i
FI: F16C32/04 A; H02K7/09; F16C32/04 Z

According to International Patent Classification (IPC) or to both national classification and IPC

**B. FIELDS SEARCHED**

Minimum documentation searched (classification system followed by classification symbols)

F16C32/04; H02K7/09

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/110948 A1 (HITACHI, LTD.) 14 July 2016 (2016-07-14) paragraphs [0085]-[0105], fig. 24-32 | 1, 7, 11-13 |
| Y | | 8-10 |
| A | | 2-6 |
| Y | JP 2020-165484 A (DAIKIN INDUSTRIES, LTD.) 08 October 2020 (2020-10-08) paragraphs [0035]-[0100], fig. 2-4 | 8-10 |
| A | JP 2013-135590 A (KAWASAKI JUKOGYO KABUSHIKI KAISHA) 08 July 2013 (2013-07-08) | 2-6 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **26 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

International application No.

**PCT/JP2024/007233**

| Patent document cited in search report | | | Publication date (day/month/year) | Patent family member(s) | | | Publication date (day/month/year) |
|---|---|---|---|---|---|---|---|
| WO | 2016/110948 | A1 | 14 July 2016 | US | 2018/0003224 | A1 | |
| | | | | paragraphs [0121]-[0143], fig. 24-32 | | | |
| | | | | CN | 107155395 | A | |
| JP | 2020-165484 | A | 08 October 2020 | (Family: none) | | | |
| JP | 2013-135590 | A | 08 July 2013 | (Family: none) | | | |

Form PCT/ISA/210 (patent family annex) (July 2022)

**REFERENCES CITED IN THE DESCRIPTION**

**Patent documents cited in the description**

• JP 2001041236 A